(19) Europäisches Patentamt
European Patent Office
Office européen des brevets

(11) **EP 4 575 551 A1**

(12) **DEMANDE DE BREVET EUROPEEN**

(43) Date de publication:
**25.06.2025 Bulletin 2025/26**

(21) Numéro de dépôt: **24221183.7**

(22) Date de dépôt: **18.12.2024**

(51) Classification Internationale des Brevets (IPC):
***G01S 7/288*** (2006.01) ***G01S 7/282*** (2006.01)
***G01S 7/02*** (2006.01) ***G01S 7/03*** (2006.01)
***G01S 7/28*** (2006.01) ***G01S 7/292*** (2006.01)
***G01S 7/34*** (2006.01) ***G01S 13/10*** (2006.01)
***G01S 13/26*** (2006.01) ***G01S 13/30*** (2006.01)
*G01S 13/22* (2006.01)

(52) Classification Coopérative des Brevets (CPC):
**G01S 7/023; G01S 7/038; G01S 7/2806; G01S 7/282; G01S 7/288; G01S 7/2923; G01S 7/34; G01S 13/103; G01S 13/26; G01S 13/30;** G01S 13/22

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **19.12.2023 FR 2314484**

(71) Demandeur: **Commissariat à l'Energie Atomique et aux Energies Alternatives**
**75015 Paris (FR)**

(72) Inventeurs:
- **ZARUDNIEV, Mykhailo**
  **38054 GRENOBLE CEDEX 09 (FR)**
- **OUVRY, Laurent**
  **38054 GRENOBLE CEDEX 09 (FR)**
- **DEHOS, Cédric**
  **38054 GRENOBLE CEDEX 09 (FR)**
- **MASSON, Gilles**
  **38054 GRENOBLE CEDEX 09 (FR)**

(74) Mandataire: **Atout PI Laplace**
**Immeuble Up On**
**25 Boulevard Romain Rolland**
**CS 40072**
**75685 Paris Cedex 14 (FR)**

# (54) RADAR IMPULSIONNEL PAR APPROCHE HYBRIDE IMPULSIONNELLE ET MODULATION DE FRÉQUENCE

(57) Dispositif radar comprenant :
- une voie d'émission (1) pour générer un signal radar (IE) ; et
- une voie de réception (2) pour recevoir et démoduler des échos (SE);

lesdites voies comprenant:
- un oscillateur local (1204) mutualisé, présentant une fréquence variable en fonction d'un signal de contrôle ;
- un générateur (1202) dudit signal de contrôle, adapté pour que la fréquence dudit oscillateur local varie dans le temps de manière linéaire ou linéaire par marches ; et
- des moyens (101, 201,) pour générer des impulsions d'émission (IE) et des impulsions de démodulation (IDR) ;

ladite voie de réception (2) comprenant un mélangeur (203) pour recevoir en entrée lesdits échos (SE) et lesdites impulsions de démodulation (IDR) et fournir en sortie un signal de mélange (SM), ainsi qu'un filtre passe-bas (206, 210) pour extraire la première composante harmonique du signal de mélange et un convertisseur analogique-numérique (207).

[Fig. 1]

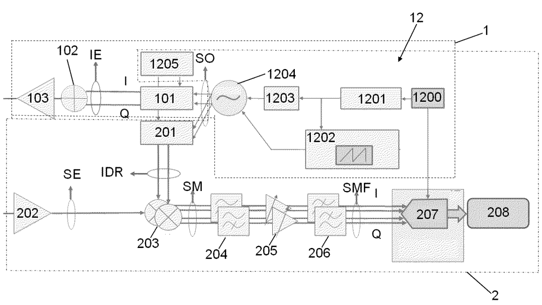


EP 4 575 551 A1

## Description

L'invention se situe dans le domaine des radars, et plus particulièrement des radars sur puce, pouvant être utilisés notamment pour la mesure de signaux vitaux d'un patient ou en tant que détecteur de présence, voir par exemple (Antide 2020). Ces radars doivent présenter à la fois une résolution spatiale élevée (de l'ordre de quelques centimètres) et une faible consommation (quelques dizaines de mW).

Une technique communément utilisée pour ces applications est celle de l'onde continue modulée en fréquence à rapport cyclique (FMCW-DC de l'anglais « Frequency-Modulated Continuous-Wave, Duty-Cycled »), voir par exemple (Liu 2019) et (Siligaris 2023). En effet, cette technique exploite le principe de la compression d'une onde émise avec une large bande vers une bande passante étroite en fréquence intermédiaire, ce qui permet d'utiliser des convertisseurs analogiques - numériques (ADC, de l'anglais « Analog-to-Digital Converters ») ayant une cadence d'acquisition relativement faible, de quelques MSps ou dizaines de MSps (1 MSps = $10^6$ échantillons par seconde - acronyme de l'anglais « Mega Samples per second »). Cependant, en présence de cibles présentant des sections efficaces radar (RCS, de l'anglais « Radar Cross Section ») très diverses, il sera nécessaire d'utiliser des ADC présentant une dynamique élevée, par exemple 9 à 12 bits ou plus, et donc une consommation relativement élevée.

Une alternative consiste à utiliser la technique d'impulsion radio ultra-large bande (IR-UWB), dans laquelle une impulsion brève est émise et le temps de vol de son écho est mesuré pour déterminer la distance de la cible. Voir par exemple (Andersen 2017). Un avantage de cette technique est que, comme les signaux d'écho sont séparés dans le temps, il est possible d'appliquer un ajustement automatique du gain (AGC, de l'anglais « Automatic Gain Control ») pour rendre possible l'acquisition d'un environnement très contrasté en présence d'objets de RCS très diverses tout en limitant la dynamique des ADC. Par contre, l'obtention d'une bonne résolution spatiale repose sur l'utilisation d'une cadence d'acquisition élevée, de plusieurs GSpS (1 GSps = $10^9$ échantillons par seconde - acronyme de l'anglais « Giga Samples per second »).

US 2002/0190894 divulgue un système radar utilisant un oscillateur contrôlé en tension piloté pour générer un signal présentant une dérive de fréquence linéaire. Ce signal est utilisé pour en extraire des impulsions radar, ainsi que pour démoduler les échos de ces dernières. Le signal démodulé est converti au format numérique et traité pour en extraire des informations de temps de vol des impulsions radar. Un inconvénient de cette technique est de nécessiter des convertisseurs analogiques-numériques rapides.

(Eisenburger 2008) divulgue un radar aéroporté à fréquence évoluant par paliers dans lequel, pour chaque marche de fréquence, une impulsion d'émission et une impulsion de démodulation en réception sont générées, sans recouvrement temporel entre les deux. Cela vise uniquement à supprimer les couplages d'antenne.

L'invention vise à surmonter, en tout ou en partie, les inconvénients précités de l'art antérieur. Plus particulièrement, elle vise à permettre d'utiliser des ADC présentant une dynamique plus faible que dans les radars FMCW-DC et une cadence d'acquisition plus faible que dans les radars IR-UWB, sans pour autant sacrifier ni la résolution spatiale, ni la dynamique de RCS des cibles détectables.

Conformément à l'invention, ce but est atteint grâce à une approche hybride combinant l'utilisation d'un signal radar impulsionnel et le principe de modulation de fréquence. Plus particulièrement, l'invention utilise un signal radar constitué d'une série d'impulsions d'émission dans lesquelles la fréquence de la porteuse varie, par exemple de manière linéaire, d'une impulsion à l'autre. Des impulsions de démodulation, générées en même temps que les impulsions d'émission par un oscillateur local mutualisé, sont utilisées pour démoduler les échos des impulsions d'émission. Le signal de démodulation, obtenu par mélange des échos des impulsions d'émission formant le signal radar et d'une impulsion de démodulation, est filtré pour en extraire une première composante harmonique, qui est ensuite convertie au format numérique pour en extraire une information de temps de vol. Le signal radar étant impulsionnel, les signaux d'échos sont séparés dans le temps, comme dans le cas de la technique IR-UWB, permettant un ajustement du gain qui autorise l'utilisation d'ADC de dynamique relativement faible même en présence d'un environnement contrasté. En outre, grâce à l'extraction de la première composante harmonique du signal de démodulation par un filtre passe-bas dimensionné de manière opportune, la cadence d'acquisition de l'ADC dépend de la fréquence de répétition des impulsions et non de la résolution spatiale ; elle peut donc être plus faible que dans la technique IR-UWB classique. De manière avantageuse, la technique de l'invention est compatible avec l'utilisation d'un brouillage de fréquence, de période de répétition des impulsions et/ou de phase, ce qui est souhaitable notamment pour des raisons de sécurité (immunité aux interférences et aux attaques électromagnétiques).
Aussi, un objet de l'invention est un dispositif radar comprenant :

- une voie d'émission configurée pour générer un signal radar ; et
- une voie de réception configurée pour recevoir des échos dudit signal radar et pour les démoduler de manière synchrone à leur génération de manière à en extraire une information de temps de vol ;

dans lequel la voie d'émission et la voie de réception comprennent:

- un oscillateur local mutualisé, présentant une fréquence variable en fonction d'un signal de contrôle ;
- un générateur dudit signal de contrôle, adapté pour que la fréquence dudit oscillateur locale varie dans le temps de manière linéaire, ou bien varie de manière linéaire par marches d'une impulsion à l'autre, ou bien en prenant une pluralité de valeurs discrètes pouvant être obtenues par brouillage d'une variation linéaire par marches d'une impulsion à l'autre ; et
- des moyens de mise en forme d'un signal généré par ledit oscillateur local à ladite fréquence variable, adaptés pour générer une série d'impulsions d'émission formant ledit signal radar et une série correspondante d'impulsions de démodulation en réception, chaque impulsion de démodulation en réception présentant une durée supérieure ou égale à celle de l'impulsion d'émission correspondante et définissant une plage temporelle respective de réception des échos ;

ladite voie de réception comprenant en outre un mélangeur configuré pour recevoir en entrée desdits échos dudit signal radar et une desdites impulsions de démodulation en réception et fournir en sortie un signal de mélange ;
caractérisé en ce que :

- ladite voie de réception comprend également un filtre passe-bas configuré pour filtrer ledit signal de mélange en extrayant sa première composante harmonique et un convertisseur analogique-numérique pour convertir le signal de mélange filtré au format numérique.

D'autres caractéristiques, détails et avantages de l'invention ressortiront à la lecture de la description faite en référence aux dessins annexés donnés à titre d'exemple et qui représentent, respectivement :

[Fig.1], le schéma fonctionnel d'un dispositif selon un premier mode de réalisation de l'invention ;

[Fig. 2], des impulsions d'émission et les impulsions de démodulation en réception correspondantes ;

[Fig. 3], un graphique illustrant l'enchainement temporel des impulsions d'émission et de démodulation en réception, ainsi que du signal généré par l'oscillateur local ;

[Fig.4], le schéma fonctionnel d'un dispositif selon un deuxième mode de réalisation de l'invention ;

[Fig. 5A], le spectre d'un signal d'émission ;

[Fig. 5B] et [Fig. 5C], le spectre du signal de mélange en réception avant et après filtrage passe-bas, respectivement, en présence d'une seule cible ;

[Fig. 6A], [Fig. 6B], [Fig. 6C] et [Fig. 6D], le signal de mélange dans le domaine du temps en présence d'une seule cible avant et après filtrage passe-bas ([Fig. 6A] : composante en phase avant filtrage ; [Fig. 6B] : composante en phase filtrée ; [Fig. 6C] : composante en quadrature avant filtrage ; [Fig. 6D] : composante en quadrature filtrée] ;

[Fig. 7A], [Fig. 7B], [Fig. 7C], [Fig. 7D], le spectre du signal de mélange en réception en présence de deux cibles, respectivement: non filtré et sans profilage de gain ([Fig. 7A]) ; après filtrage passe-bas mais sans profilage de gain ([Fig. 7B]) ; non filtré mais avec profilage de gain ([Fig. 7C]) ; après filtrage passe-bas et avec profilage de gain ([Fig. 7C]) ;

[Fig. 8], trois différents types de signaux de contrôle de l'oscillateur local ;

[Fig. 9], le schéma fonctionnel de la voie de réception d'un dispositif selon un troisième mode de réalisation de l'invention ;

[Fig. 10] et [Fig. 11], l'utilisation d'un intégrateur fenêtré pour effectuer simultanément filtrage passe bas, profilage de gain et suppression de signaux indésirables ;

[Fig. 12], une voie de réception parallélisée selon un autre mode de réalisation de l'invention ; et

[Fig. 13], [Fig. 14], [Fig. 15], [Fig. 16] les schémas fonctionnels de dispositifs selon d'autres modes de réalisation de l'invention.

Le dispositif radar de la [Fig. 1] se compose d'une voie d'émission 1, pour générer un signal radar constitué d'impulsions dites d'émission IE et d'une voie de réception 2, pour recevoir des échos de ces impulsions réfléchies par des cibles et les traiter de manière à en extraire une information de temps de vol. Ces deux voies présentent des composants mutualisés 12.

Les composants mutualisés entre la voie d'émission et la voie de réception comprennent une horloge 1200 générant un signal de cadencement du dispositif déterminant la période de répétition PRP des impulsions d'émission. Optionnellement, un brouilleur temporel 1201 introduit des variations pseudo-aléatoires de cette période de répétition ; on désigne alors par $PRP_n$ l'intervalle entre l'impulsion d'émission de rang n et la suivante (voir la [Fig. 2]). Dans ce cas, c'est la plus petite PRP possible qui détermine la distance maximale de cible qui peut être mesurée.

Le signal de cadencement, éventuellement brouillé temporellement, pilote un dispositif 1203 de déclenchement d'un oscillateur local 1204 du type contrôlé en fréquence. A chaque signal de cadencement, le dispositif 1203 redémarre l'oscillateur local 1204, puis l'arrête avant l'arrivée du signal de cadencement suivant. La phase initiale de l'oscillateur 1204 est la même à chaque redémarrage. Sa fréquence d'oscillation, quant à elle varie de manière linéaire d'un redémarrage à l'autre. Cela est rendu possible par un générateur 1202 d'un signal de contrôle de l'oscillateur, piloté par le signal de cadencement (éventuellement brouillé temporellement). Par contre, la fréquence de l'oscillateur local se maintient constante entre son déclenchement et son arrêt. D'une manière générale, la fréquence de l'oscillateur local est de préférence dans le domaine des hyperfréquences. On entend par là des fréquences comprises entre 300 MHz et 300 GHz ou, de manière plus restrictive, la plage 1 GHz - 100 GHz.

Le signal d'oscillateur SO généré par l'oscillateur local 1204 - constitué d'une composante en phase I et d'une composante en quadrature Q - est fourni en entrée à un premier metteur en forme d'impulsions 101 appartenant uniquement à la voie d'émission 1, configuré pour générer, à chaque déclenchement de l'oscillateur local, une impulsion d'émission IE ayant typiquement une durée de l'ordre de quelques nanosecondes (ns). La partie supérieure de la [Fig. 2] illustre une impulsion d'émission $IE_n$ comportant un front montant FME et un front descendant FDE, suivie - après un intervalle PRP - par une autre impulsion d'émission $IE_{n+1}$. Cette dernière présente une enveloppe identique à celle de $IE_n$, mais une porteuse de fréquence différente, comme expliqué plus haut.

Le composantes I et Q des impulsions d'émission IE sont combinées par un combineur 102, puis fournies en entrée à un amplificateur de puissance 103 pour être ensuite transmis par une antenne non représentée.

Le signal d'oscillateur SO est également fourni en entrée à un deuxième metteur en forme d'impulsions 201 appartenant uniquement à la voie de réception 2, configuré pour générer, à chaque déclenchement de l'oscillateur local, une impulsion dite « de démodulation en réception » IDR, préférablement de durée sensiblement supérieure (par exemple d'au moins un facteur 10) à celle des impulsions d'émission IE. La durée de l'impulsion IDR donne une limite supérieure à la fréquence de répétition des impulsions et détermine la « profondeur » d'acquisition, c'est-à-dire la distance maximale de cible pouvant être détectée.

Selon un aspect avantageux de l'invention, les fonctions de mise en forme des impulsions d'émission et de réception sont séparées. En effet, le metteur en forme d'émission définit préférentiellement une enveloppe en bande de base, mais peut également définir une forme en bande de base (ce qui inclut une notion de signe), et peut piloter un amplificateur de puissance numérique. Le metteur en forme en réception, quant à lui, réalise souvent un fenêtrage tout ou rien de l'oscillateur synchronisé avec la variation de fréquence de l'oscillateur local.

L'oscillateur local, par contre, est partagé entre émission et réception.

La partie inférieure de la [Fig. 2] illustre une impulsion de démodulation en réception $IDR_n$ comportant un front montant FMR et un front descendant FDR, suivie - après un intervalle PRP - par une autre impulsion de démodulation en réception $IDR_{n+1}$. Cette dernière présente une enveloppe identique à celle de $IDR_n$, mais une porteuse de fréquence différente, comme expliqué plus haut. Par contre, les porteuses des impulsions de démodulation en réception $IDR_n$, $IDR_{n+1}$ sont identiques à celles des impulsions d'émission correspondantes $IE_n$, $IE_{n+1}$.

Un brouilleur de phase 1205 peut optionnellement être prévu pour appliquer des inversions de polarité identiques, selon une séquence pseudo-aléatoire, aux impulsions IE et IDR. Si les inversions sont appliquées de manière indépendante aux deux quadratures de ces impulsions il en résulte une modulation QPSK par un signal pseudo-aléatoire. En variante, le brouilleur 1205 peut appliquer des sauts de phase pouvant prendre plus que deux valeurs.

Les impulsions IDR sont fournies en entrée à un mélangeur 203 qui reçoit également, sur une autre entrée, un signal d'écho SE, capté par une antenne non représentée et amplifié par un amplificateur à bas bruit 202. On considère dans un premier temps que le signal d'écho $SE_n$, qui est mélangé avec l'impulsion de démodulation en réception $IDR_n$, est issu de la réflexion de l'impulsion d'émission $IE_n$ par une cible à une distance d et correspond donc à une réplique de ladite impulsion d'émission retardée de $\tau = 2\ d/c$, c étant la célérité de la lumière. On comprend que, dans ces conditions, l'impulsion de démodulation en réception définit une fenêtre de réception pour les signaux d'écho.

La [Fig. 3] illustre l'enchainement temporel des enveloppes des impulsions d'émission IE et de démodulation en réception IDR, ainsi que du signal généré par l'oscillateur local SO. A un instant initial $t_0$, l'oscillateur local 1204 reçoit le signal de commande qui définit sa fréquence d'oscillation puis, à un instant $t_1$ environ 1 ns plus tard, il reçoit un signal de déclenchement qui démarre l'oscillation. On remarque que l'amplitude du signal SO croit progressivement avant de se stabiliser à un instant $t_2$ et conserver une valeur constante jusqu'à l'arrêt de l'oscillateur à un instant $t_3$, plusieurs dizaines de nanosecondes plus tard. Ledit arrêt intervient environ 10 ns avant l'arrivée du signal de déclenchement suivant. Les fronts montants des impulsions d'émission IE et de démodulation en réception IDR démarrent une fois que l'amplitude du signal SO est stabilisée. Alors que l'impulsion d'émission IE est très brève (e.g. 6 ns), l'émission de démodulation en réception se poursuit jusqu'à peu de temps (e.g. 1 ns) avant l'arrêt de l'oscillateur.

Le signal de mélange SM issu du mélangeur 203 est d'abord filtré par un filtre passe-haut (optionnel) dont le but est de supprimer des composantes continues ou à très basse fréquence issues d'un couplage direct entre émetteur et réception et autres effets parasites. Ensuite, le signal est de préférence amplifié par un amplificateur à gain variable 205 qui effectue un ajustement du gain permettant de compenser les différences d'intensité des différents échos reçus. La variation peut suivre un profil prédéfini - par exemple croissant dans le temps, car les échos plus tardifs correspondent à une cible plus éloignée et donc à une atténuation plus importante - ou être adaptative.

Le signal de mélange SM traverse ensuite un filtre passe-bas 206, avec une bande passante de l'ordre de quelques MHz (en fonction de la pente de fréquence utilisée en émission et de la plus grande distance d'écho voulue). Le signal de mélange filtré SMF en sortie du filtre 206 est ensuite échantillonné et converti au format numérique par un convertisseur analogique - numérique (ADC) 207. Etant donné la faible bande passante du filtre 206, le convertisseur 207 peut présenter une fréquence d'acquisition relativement basse, par exemple 20 MSpS (1 MSpS = $10^6$ échantillons/seconde). L'utilisation d'un amplificateur à gain variable permet de limiter la résolution du convertisseur - par exemple 12 bits - tout en conservant une dynamique acceptable.

Le signal converti au format numérique est enfin traité par un processeur 208 afin d'en extraire une information de temps de vol des signaux d'écho. Comme cela sera expliqué plus loin, ce traitement peut consister dans le simple calcul d'une transformée de Fourier.

La [Fig. 4] montre le schéma fonctionnel d'un dispositif selon un deuxième mode de réalisation de l'invention. Ce dispositif diffère de celui de la [Fig. 1] en ce que l'oscillateur local 1204 est déclenché par un dispositif 1206 qui, en même temps, met en forme le front de montée des impulsions IE et IDR. Le front descendant des impulsions IE est mis en forme par un dispositif 105 recevant en entrée le signal d'oscillateur, tandis que le front descendant des impulsions IDR est simplement défini par l'arrêt de l'oscillateur. En d'autres termes, la génération des impulsions se fait partiellement en bande de base, au lieu de se faire entièrement dans le domaine hyperfréquence comme dans le cas du premier mode de réalisation. Le contrôle du spectre est cependant plus difficile.

Le document FR 3 099 910 divulgue un circuit pouvant servir à la réalisation des metteurs en forme d'impulsions 101, 201 et 105. Ce circuit est compatible avec un brouillage de phase binaire.

Le document FR 3 015 153 décrit un oscillateur hyperfréquence déclenché et contrôlé en fréquence d'oscillation, pouvant servir à la mise en oeuvre de l'oscillateur local 1204.

Le fonctionnement du dispositif des [Fig. 1] et [Fig. 4] sera maintenant illustré à l'aide d'un modèle analytique et de simulations numériques.

On définit d'abord une impulsion d'émission de référence en bande de base $p_0(t)$ dont les caractéristiques fréquentielles sont compatibles des gabarits réglementaires et du minimum de bande passante recherché, ainsi qu'ayant un support temporel aussi faible que possible. On peut par exemple utiliser une impulsion gaussienne d' expression :

$$p_0(t) = e^{-\frac{t^2}{T_p^2}} \quad (1)$$

Où le paramètre de durée $T_p$ est lié à la bande $B_{xdB}$ de l'impulsion par

$$T_p = \frac{2\sqrt{-\ln\left(10^{\frac{x_{dB}}{20}}\right)}}{\pi \cdot B_{x_{dB}}} \quad (2)$$

$x_{dB}$ étant le niveau de référence pour la mesure de la bande $B_{xdB}$. On prend typiquement $x_{dB}$=-10 dB et $B_{xdB}$=500 MHz ce qui donne $T_p \sim 1.367 ns$ et une durée effective de l'impulsion à 99% de son amplitude égale à 4.292 * $T_p \sim 5.867 ns$.

Une impulsion sensiblement plus courte est possible, l'ordre de grandeur à retenir en pratique est $\frac{2}{B_{-10_{dB}}}$.

L'impulsion d'émission de référence est ensuite décalée temporellement de sorte que son support effectif soit sur $[0, \beta T_p]$, avec par exemple $\beta$ = 4.292.

On considère maintenant le cas où l'oscillateur local 1204 est redémarré à chaque impulsion à partir du même étant initial, avec une phase conventionnellement prise égale à 0 à chaque démarrage d'impulsion et une fréquence actualisée à chaque impulsion suivant une rampe linéaire montant de pente $\alpha = \frac{B_{chirp}}{T_{chirp}}$ où $B_{chirp}$ est l'excursion en fréquence du chirp et $T_{chirp}$ la durée du chirp, la fréquence se maintenant constante entre deux redémarrages. On considère aussi que l'intervalle PRP entre deux redémarrages de l'oscillateur est constant et vaut T ; dès lors, le nombre d'impulsions est $N = \frac{T_{chirp}}{T}$. L'impulsion de démodulation en réception est prise de longueur égale à T et on ne prend pas en compte le brouillage de phase. L'expression analytique du signal radar émis, se présentant sous la forme d'une suite d'impulsions d'émission, est donc donnée par

$$s(t) = \sum_{n=0}^{N-1} p_0(t - nT)e^{j\omega(n)(t-nT)} \quad (3)$$

Avec $\omega(n) = \omega_m + \frac{n}{N}2\pi B_{chirp} = \omega_m + n2\pi\alpha T = \omega_m + n\alpha_r T$ avec $\alpha_r = 2\pi\alpha$

L'expression analytique de la suite d'impulsions de démodulation en réception IDR s'écrit

$$LO_{Rx}(t) = \sum_{n=0}^{N-1} R_T(t - nT)e^{-j\omega(n)(t-nT)} \quad (4)$$

Avec $R_T(t)$ une porte temporelle rectangulaire unitaire de durée T centrée sur $\frac{T}{2}$.

En considérant le cas d'une réflexion du signal radar par une seule cible à une distance d, le signal de mélange SM en sortie du mélangeur est obtenu en calculant le produit du signal radar retardé de $\tau = 2\, d/c$ et du signal $LO_{Rx}(t)$. On obtient

$$SM(t) = s(t-\tau).LO_{Rx}(t) = \sum_{n=0}^{N-1} p_0(t - nT - \tau)e^{j\omega(n)(t-nT-\tau)} \sum_{n=0}^{N-1} R_T(t - nT)e^{-j\omega(n)(t-nT)} \quad (5)$$

On considère qu'il n'y a pas d'interférence entre PRP consécutives, c'est-à-dire que l'impulsion d'émission $TE_n$ est reçue pendant la durée de l'impulsion de démodulation en réception $TDR_n$, ce qui suppose $\tau + \beta.\, T_p < T$. On a alors :

$$SM(t) = \sum_{n=0}^{N-1} p_0(t - nT - \tau)R_T(t - nT)e^{j\omega(n)(t-nT-\tau)}\, e^{-j\omega(n)(t-nT)} = e^{-j\omega_m\tau} \sum_{n=0}^{N-1} p_0(t - nT - \tau)e^{-jnT.\alpha_r\tau} \quad (6)$$

Le terme de gauche est un terme de phase fixe que l'on peut négliger. Le terme de somme est un signal impulsionnel dont la phase des impulsions consécutives tourne de $\alpha_r\tau$ ce qui revient dans le domaine fréquentiel à avoir une première harmonique à $F_\tau = \frac{1}{2\pi}\frac{\Delta\varphi}{T} = -\alpha\tau$. Les autres composantes fréquentielles sont de période $\frac{1}{T}$ et donc à $\frac{k}{T} + F_\tau$ pour tous les entiers relatifs *k.* L'information de distance de l'objet est donc présente dans cette première harmonique, qui est extraite par le filtre passe-bas 206, ayant typiquement une bande passante inférieure à $\frac{1}{T}$. La cadence d'échantillonnage du convertisseur analogique-numérique 207 est déterminé par cette bande passante. En présence de plusieurs échos à des distances différentes, on obtient autant d'harmoniques, résolues ou pas.

La [Fig. 5A] illustre le spectre de puissance d'un signal radar présentant une largeur de bande de 500 MHz, une fréquence de répétition des impulsions de 10 MHz, un chirp défini par $\alpha = 0.005\frac{\text{GHz}}{\mu\text{s}}$. En trait pointillé, le gabarit spectral qui doit être respecté, et qui l'est effectivement.

La [Fig. 5B] illustre le spectre du signal de mélange SM en présence d'une cible à une distance telle que le retard $\tau$ vaut 20 ns. On remarque la présence d'harmoniques discrètes, dont celle de plus basse fréquence est extraite par le filtre passe-bas 206. La [Fig. 5C] montre le spectre du signal filtré SMF, dans lequel les harmoniques d'ordre supérieur sont atténuées de 20 dB ou plus, et donc effectivement supprimées. Les [Fig. 6A] et [Fig. 6C] montrent, respectivement, les composantes I et Q du signal SM dans le domaine du temps, et les [Fig. 6B] et [Fig. 6C] les composantes I et Q du signal filtré SMF.

Les [Fig. 7A] et [Fig. 7B] montrent les spectres des signaux SM et SMF, respectivement, dans le cas de deux réflexions à 20 ns et 60 ns, avec un écart de puissance de 19 dB et en l'absence de profilage du gain. On peut voir le dédoublement des harmoniques, mais la composante correspondant au retard le plus important est difficilement détectable. Comme illustré sur les [Fig. 7C] et [Fig. 7D], l'utilisation de l'amplificateur 205 avec ajustement automatique de gain permet de compenser les variations d'intensité des échos reçus.

Certaines hypothèses du modèle analytique peuvent maintenant être relâchées.

Tout d'abord on suppose que la condition selon laquelle il n'y a pas d'interférence entre PRPs consécutives, c'est à dire $\tau + \beta T_p < T$, n'est pas remplie. Dans ce cas, il y a repliement du spectre du signal de mélange, car un écho est démodulé par un signal de fréquence différente de celle de sa porteuse.

D'abord on remarque que $0 \leq \tau < T$ équivaut à $\alpha T \leq F_\tau < 0$ et puisque $\alpha = \frac{B_{chirp}}{NT}$ on a $\frac{B_{chirp}}{N} \leq F_\tau < 0$. Il y a donc un degré de liberté offert par la bande parcourue par le chirp entre la plage de fréquence intermédiaire (c'est-à-dire en sortie du mélangeur) couverte et la PRF. Dans l'exemple donné précédemment (PRF = 10MHz, $\alpha$ = 0.025GHz/$\mu$s et $B_{chirp}$ = 500MHz), N = 200 et l'IF minimum est-2.5MHz soit PRF/4, le filtrage des harmoniques est possible car la plus basse est à 7.5MHz. Si $B_{chirp}$ = 1GHz alors l'IF minimum est -5MHz et la plus basse harmonique +5MHz ce qui est nécessiterait un filtrage complexe.

Revenons au cas $(k+1)T > \tau \geq kT$ avec $k > 1$ et supposons qu'il n'y a pas de brouillage de phase. Alors, à l'effet de bord près provoqué par les impulsions « perdues », le spectre du signal SM est « replié » à $F_{\tau-kT}$. On vérifie que $F_{\tau-kT} \neq F_\tau + \frac{k}{T}$. Dis différemment, $F_\tau$ n'est pas une fonction continue de $\tau$, ce n'est pas un repliement spectral « classique ».

On suppose toujours $(k+1)T > \tau \geq kT$ avec $k > 1$ et qu'il y ait un brouillage de phase de type BPSK. Dans ce cas la séquence de débrouillage est désalignée puisque dans l'architecture de base elle est synchrone de celle de brouillage. Dès lors, les impulsions ne seront pas sommées de façon cohérente.

Il convient à ce point d'enrichir le modèle du signal SM en sortie de mélangeur en prenant en compte les opérations de brouillage et débrouillage BPSK avec le code binaire $b(n) \in \{-1,1\}$ :

$$SM(t) = \sum_{n=0}^{N-1} b(n).\, p_0(t - nT - \tau) e^{j\omega(n)(t-nT-\tau)} \sum_{n=0}^{N-1} \overline{b(n)}.\, R_T(t - nT) e^{-j\omega(n)(t-nT)} \quad (7)$$

Si $0 \leq \tau < T$, l'opération est transparente :

$$SM(t) = s(t-\tau).\, LO_{Rx}(t) = \sum_{n=0}^{N-1} \underbrace{b(n)\overline{b(n)}}_{1}.\, p_0(t - nT - \tau) e^{-j\omega(n)\tau} \quad (8)$$

Si $(k+1)T > \tau \geq kT$ avec $k > 1$ :

$$SM(t) = \sum_{n=0}^{N-1} b(n)\overline{b(n+k)}.\, p_0(t - nT - \tau) e^{-j\omega(n)(t-nT-\tau)}\; e^{j\omega(n+k)\,(t-(n+k)T)} \quad (9)$$

Puisque b(n) est idéalement un processus (séquence) aléatoire blanc, alors $E[b(n)\overline{b(n+k)}] = 0, \forall k \neq 0$ et $E[m(t)] =$

0 donc par ergodicité m(t) est à moyenne nulle. En pratique, b(n) n'est pas parfaitement blanc et m(t) s'apparente à un bruit d'interférence étalant la puissance dans toute la bande en fonction de la covariance de b(n).

Dans un mode de réalisation permettant de traiter les cas où (k + 1)T > τ > kT avec k > 1 il est nécessaire de paralléliser pour toutes les valeurs de k souhaitées l'opération de débrouillage. Dans ce cas il conviendrait préférentiellement de produire une impulsion de démodulation en réception sans brouillage de phase, ce qui nécessite une modification mineure de l'architecture des [Fig. 1] et [Fig.4], et réaliser le débrouillage de phase après le mélangeur de réception en parallélisant la chaîne bande de base et en retardant de k valeurs la séquence de débrouillage $\overline{b(n)}$. Ceci constitue une option supplémentaire.

Il existe enfin des portions de PRP de recouvrement où la sortie du mélangeur est corrompue : ( $kT - \beta T_p \leq \tau < kT$ ) l'impulsion reçue se trouvant mélangée avec un signal de démodulation à phase discontinue. Cela concerne par extension les portions de PRP dans laquelle le signal de démodulation est volontairement éteint. Un changement de PRP peut permettre de traiter ces zones « mortes ».

On considère maintenant le cas d'un brouillage temporel (variations pseudo-aléatoires de l'espacement entre impulsions). Des simulations numériques permettent de vérifier que cela est sans impact sur la fréquence de l'harmonique fondamentale dès lors que l'amplitude de variation d'espacement n'est pas excessive.

L'hypothèse suivante porte sur le redémarrage de l'oscillateur local et sa phase initiale. Dans le modèle analytique proposé, la phase est réinitialisée à 0 (ou à n'importe quelle valeur constante) à chaque impulsion, quelle que soit la fréquence générée. Le modèle analytique montre bien que si cette hypothèse est levée alors l'expression du signal de mélange devient :

$$\mathrm{SM}(t) = \sum_{n=0}^{N-1} p_0(t - nT - \tau) R_T(t - nT) e^{j\omega(n)(t-\tau)}\, e^{-j\omega(n)(t)} \quad (10)$$

ce qui donne le même résultat, le terme de phase s'annulant en sortie de mélangeur.

On s'intéresse enfin au cas où la fréquence de l'oscillateur évolue de façon continue et linéaire, y compris pendant la génération des impulsions IE et IDR, qui présentent donc un « chirp ». On maintient l'hypothèse d'une réinitialisation (et donc d'une discontinuité) de la phase au début de chaque impulsion (cette hypothèse sera relâchée par la suite). On peut alors écrire

$$s(t) = \sum_{n=0}^{N-1} p_0(t - nT) e^{j\omega(t)(t-nT)} \quad (11)$$

$$\mathrm{LO_{Rx}}(t) = \sum_{n=0}^{N-1} R_T(t - nT) e^{-j\omega(t)(t-nT)} \quad (12)$$

Avec

$$\omega(t) = \omega_m + 2\pi \frac{B_{chirp}}{T_{chirp}} t = \omega_m + \alpha_r t$$

Après mélange, on obtient (toujours avec les autres hypothèses initiales dont la réinitialisation de phase) :

$$\mathrm{SM}(t) = e^{-j\omega_m \tau} \sum_{n=0}^{N-1} p_0(t - nT - \tau) e^{-j\alpha_r \tau(2t-\tau-nT)} \quad (13)$$

Si on considère un échantillonnage tel que $t = nT + \tau$, alors :

$$m(t) \sim e^{-j\omega_m \tau} e^{-j\alpha_r \tau^2} \sum_{n=0}^{N-1} p_0(t - nT - \tau) e^{-j\alpha_r \tau n T} \quad (14)$$

Ce signal est donc une sinusoïde de fréquence $F_\tau = -\alpha\tau$ échantillonnée par un peigne fini d'impulsions espacées de T. Le résultat est bien un spectre de raies de fréquences $F_\tau(k) = -\alpha\tau + \frac{k}{T}$ pondéré par le spectre de l'impulsion. La différence avec le cas considéré précédemment ne provient que de l'évolution la fréquence de l'oscillateur local pendant la durée de l'impulsion, que l'on peut calculer : si l'impulsion dure $\beta T_p$, la fréquence change de $\alpha\beta T_p$ soit 0.147MHz avec $\beta T_p$ = 5.867ns et $\alpha$ = 0.025GHz/$\mu$s et la différence est bornée par 0.3°. On voit que cette différence est marginale compte tenu des bandes passantes envisagées.

La notion de « continuité de phase » mérite d'être précisée d'autant plus que dans la plupart des cas le signal de LO est un signal réel carré. Sa phase n'est donc définie qu'aux instants correspondant à ses fronts montants et descendants, et ne prend donc arbitrairement que deux valeurs discrètes, ce qui parait incompatible avec toute notion de « continuité ». La phase doit donc être définie de façon relative par rapport à une référence (ainsi les deux valeurs discrètes sont 0 et $\pi$) puis soit en considérant l'harmonique principale (qui permet de remonter à la phase comme argument de la sinusoïde formant cette harmonique principale) soit, plus simplement en comparant le signal de l'oscillateur local à un modèle de signal idéal à phase continue de référence, par exemple sinusoïdal dont on prend le signe. La comparaison montrera qu'il n'y a pas de saut de phase du résultat du modulateur par rapport à la référence, dit différemment que les fronts montants et descendants sont confondus à une gigue près et notamment aux instants où la fréquence change lors de la rampe. L'écart entre le modèle et la sortie du modulateur est uniquement la gigue liée aux performances attendues en bruit de phase du modulateur, d'allure typiquement gaussienne sans aberrations représentant des sauts de phase.

On considère maintenant plus précisément la condition de continuité de phase sur le signal d'oscillateur local en émission (le signal d'oscillateur local en réception a la même phase, avec le signe opposé):

$$LO_{Tx}(t) = \sum_{n=0}^{N-1} R_T(t - nT)e^{j\omega(n)(t-nT)+j\varphi(n)} \quad (15)$$

Pour que la phase soit continue, il faut qu'elle soit identique à chaque jonction de segments de pulsation $\omega(n)$ à t - nT = T et $\omega(n + 1)$ à t - en + 1)T = 0 ce qui s'écrit

$$\omega(n)(T) + \varphi(n) = \omega(n+1)(0) + \varphi(n+1) \quad (16)$$

Soit

$$\varphi(n+1) = \varphi(n) + T\omega(n), \forall n \quad (17)$$

Pour que la phase soit redémarrée à 0 (ou à une valeur constante sans perte de généralité), on a la même formulation mais avec la condition :

$$\varphi(n) = 0, \forall n \quad (18)$$

On écrit maintenant la sortie du mélangeur de réception en supposant un écho reçu avec un délai $\tau$ tel que

$$\tau = (\tau - kT) + kT = (\tau \bmod T) + kT \quad (19)$$

Ce qui veut dire que si k = 0 l'écho est reçu dans la PRP et si k > 0 l »écho est reçu au-delà de la PRP. On a, en supposant un brouillage de phase b(n) :

$$SM(t) = \sum_{n=0}^{N-1} b(n)\overline{b(n+k)}.\, p_0(t - nT - \tau)e^{j\omega(n)(t-nT-\tau)+j\varphi(n)}\ e^{j\omega(n+k)(t-(n+k)T)+j\varphi(n+k)} \quad (20)$$

L'impact du brouillage de phase a déjà été étudié. On se concentrera donc ici sur la valeur de la pulsation IF (à fréquence intermédiaire) de façon à mettre en évidence l'impact de la continuité ou de la réinitialisation de la phase. Pour simplifier, on va supposer que l'impulsion est à bande infinie, soit une impulsion de Dirac, ce qui revient à « échantillonner » la sortie du mélange par l'impulsion puis aux instants optimaux de la présence de ces impulsions, ce qui revient à écrire :

$$SM(t) = \sum_{n=0}^{N-1} b(n)\overline{b(n+k)}.\delta(t-nT-\tau)e^{j\omega(n)(t-nT-\tau)+j\varphi(n)}\, e^{-j\omega(n+k)(t-(n+k)T)-j\varphi(n+k)} \quad (21)$$

Ce qui se simplifie en

$$m(t) = \sum_{n=0}^{N-1} b(n)\overline{b(n+k)}.\delta(t-nT-\tau)e^{j\psi(n)} \quad (22)$$

On considère le terme de phase :

$$\psi(n) = \omega(n)(t-nT-\tau) + \varphi(n) - j\omega(n+k)(t-(n+k)T) - \varphi(n+k) \quad (23)$$

avec t - nT - $\tau$ = 0, il devient :

$$\psi(n) = \varphi(n) - \varphi(n+k) - \omega(n+k)(\tau - kT) \quad (24)$$

On peut définir la pulsation IF à l'échantillon n + 1 comme :

$$\omega_{IF}(n+1) = \frac{\psi(n+1)-\psi(n)}{T} = \frac{\varphi(n+1)-\varphi(n)}{T} - \frac{\varphi(n+k+1)-\varphi(n+k)}{T} - \frac{\omega(n+k+1)-\omega(n+k)}{T}(\tau - kT) \quad (25)$$

Et si la rampe de fréquence est idéale, alors on a :

$$\omega(n) = \omega_m + \frac{n}{N}2\pi B_{chirp} = \omega_m + n2\pi\alpha T = \omega_m + n\alpha_r T \quad (26)$$

Dans le cas où la phase est réinitialisée on trouve :

$$\omega_{IF,0}(n+1) = -\frac{\omega(n+k+1)-\omega(n+k)}{T}(\tau - kT) \quad (27)$$

Soit avec une rampe de fréquence idéale, on obtient une pulsation IF constante :

$$\omega_{IF,0}(n+1) = \omega_{IF,0} = -\alpha_r(\tau \bmod T) \quad (28)$$

L'IF correspond au retard module la PRP multiplié par $\alpha$.

Dans le cas où la phase est continue on trouve :

$$\omega_{IF}(n+1) = \omega(n) - \omega(n+k) - \frac{\omega(n+k+1)-\omega(n+k)}{T}(\tau - kT) \quad (29)$$

Soit avec une rampe de fréquence idéale, on obtient une pulsation IF constante :

$$\omega_{IF,c}(n+1) = \omega_{IF,c} = -\alpha_r kT - \alpha_r(\tau - kT) = -\alpha_r\, \tau \quad (30)$$

L'IF correspond au retard mutliplié par $\alpha$ comme dans le cadre FMCW classique.

Enfin, puisque le résultat est échantillonné à la période T, on obtient bien un spectre de raies IF espacées de 1/T donc une recopie des IF calculées ci-dessus tous les 1/T qui peuvent conduire à une ambiguités dans la bande ] $-\frac{1}{T}$, 0] (car ici l'IF est négative avec $\alpha > 0$) dès lors que :

$\tau > T$ dans le cas phase constante par construction (modulo) : l'IF est dans l'intervalle ] - $\alpha$T, 0]

$\tau > 2T$ dans le cas à phase continue à cause des recopies due à l'échantillonage : l'IF est dans l'intervalle] - 2$\alpha$T, 0].

En d'autres termes, tant que les retards des échos ne dépassent pas T, il n'y a pas de réelle différence entre le cas d'une phase continue et celle d'une réinitialisation de la phase à chaque impulsion.

Jusqu'ici on a considéré le cas où le signal de contrôle de l'oscillateur généré par le dispositif 1202 est une rampe linéaire, croissante ou décroissante. En fait, l'excursion de fréquence doit être bornée, le signal de contrôle sera donc plutôt en dent de scie ou triangulaire (alternance d'une rampe croissante et d'une rampe croissante). Comme, de préférence, la fréquence de l'oscillateur varie de manière discrète, d'un déclenchement à l'autre, le signal de contrôle peut, lui aussi, varier par palier. Sur la [Fig. 8], la référence 1202' désigne un dispositif de génération d'un tel signal de contrôle, linéaire par paliers. Les valeurs prises par la tension de contrôle de l'oscillateur sont désignés par les entiers de 0 à 5 ; une rampe linéaire par paliers correspond donc à la séquence {0, 1, 2, 3, 4, 5}. Selon un mode de réalisation alternatif de l'invention, ces valeurs discrètes peuvent faire l'objet d'un brouillage, qui se traduit par un brouillage de fréquence du signal radar ; sur la [Fig. 8], la référence 1202" désigne un dispositif de génération d'un tel signal de contrôle, correspondant à la séquence {4, 1, 2, 5, 3, 0}. En variante, certaines valeurs peuvent être omises, par exemple on peut utiliser la fréquence {4, 1, 5, 3, 0}. Dans ces conditions, un graphique de l'évolution de la fréquence en fonction du temps ne représente plus une ligne droite ou un escalier ; toutefois, les valeurs de fréquence appartiennent à une droite. Ces points ne sont pas nécessairement équidistants, et certains peuvent manquer.

L'intérêt premier de cette variante est relatif aux problèmes de coexistence avec d'autres radar du même type, ou à la sécurité (séquence non connue d'un attaquant et modifiable à volonté).Un autre intérêt est la possibilité d'émettre sur plusieurs antennes (fonctionnement MIMO, de l'anglais « Multiple Input - Multiple Output », c'est-à-dire « entrée multiples, sorties multiples ») en utilisant des séquences de saut de fréquences orthogonales entre antennes. Ce faisant, l'émission peut se faire simultanément sur plusieurs sous-bandes de fréquence en parallèle et chaque voie de réception ne récupère que les résultats de corrélation avec la séquence de son émetteur correspondant.

La difficulté induite par le brouillage de fréquence est la nécessité de le compenser dans le récepteur, faute de quoi le signal de mélange ne sera pas obtenu car il y aura des sauts de phase aléatoires entre les composantes à basse fréquence du signal de mélange correspondant à des impulsions successives. Cette compensation ne peut pas être réalisée dans le domaine analogique. Pour la réaliser dans le domaine numérique sans avoir à augmenter très sensiblement la cadence d'acquisition du convertisseur analogique-numérique 207, il est possible de mettre en oeuvre le filtrage passe-bas au moyen d'un intégrateur fenêtré 210 piloté par le signal de cadencement, comme illustré sur la [Fig. 9]. L'intégrateur étant remis à zéro à chaque réinitialisation de l'oscillateur local, chaque échantillon numérisé contient l'information utile, filtré passe-bas par l'intégrateur sur un temps $PRP_n$. Un module de débrouillage 211 applique aux échantillons la permutation qui les remet dans le « bon » ordre (celui dans lequel la fréquence du signal d'oscillateur évolue linéairement).

Même indépendamment du cas du brouillage de fréquence, l'utilisation d'un intégrateur fenêtré peut s'avérer avantageux car un tel dispositif peut substituer, en tout ou en partie, l'amplificateur à gain variable 205 voire le filtre passe-haut 204. En effet, comme illustré sur la [Fig. 10], l'intégrateur présente un gain d'intégration G qui peut varier de manière prédéfinie ou adaptative pour compenser les variations d'intensité des échos reçus de différentes cibles. L'exemple de la [Fig. 10] correspond au cas où le signal d'écho est constitué de réflexions provenant de cibles de sections efficaces radar sensiblement équivalentes, mais situées à des distances différentes. Dans ce cas, les réflexions plus tardives sont en général plus faibles car elles subissent une atténuation plus importante, ce qui peut être compensé par un gain d'intégration G croissant à l'intérieur de la fenêtre d'intégration FI. En outre, les signaux indésirables SEI destinés à être supprimés par le filtre passe-haut 204 parviennent très tôt à la voie de réception, car ils sont principalement dus à un couplage direct avec l'émetteur. Ces signaux peuvent donc être supprimés, au moins en partie, en décalant de quelques nanosecondes le démarrage de la fenêtre d'intégration par rapport au début de la période PRP.

Le profil temporel de gain d'intégration peut être introduit, cumulativement ou alternativement, à plusieurs niveaux de la chaîne d'intégration :

- au niveau de l'amplificateur à bas bruit 202 ;
- à celui de l'amplificateur à gain variable 205 ;
- à celui du metteur en forme d'impulsions de réception 201 ;
- à celui du mélangeur en réception 203 ;
- à celui de l'intégrateur.

Le profil temporel de gain, en particulier lorsqu'il est introduit, au moins en partie, au niveau du metteur en forme d’impulsions de réception 201, à celui du mélangeur en réception 203 ou à celui de l’intégrateur, peut également réaliser une pondération de type « tout ou rien » (OOK, de l’anglais « on-off keying ») pour ne retenir que les plages temporelles dans lesquelles il y a des échos utiles. Cela est illustré sur la [Fig. 11], où le signal en réception est pondéré par la fenêtre d’intégration FI, le gain G croissant linéairement dans le temps et les fenêtres de sélection temporelle FST centrées sur les échos, obtenues par exemple par modulation OOK du metteur en forme d’impulsions de réception.

Le positionnement des fenêtres de sélection temporelle FST peut être obtenu grâce à un apprentissage préalable du canal.

Dans un mode de réalisation alternatif, illustré sur la [Fig. 12], toute la partie de la voie de réception située en aval du mélangeur 203 ou du filtre passe-haut 2024 est parallélisée en N>1 chaînes d’acquisition CA1 - CAN. Cela permet de découper le temps PRP en N plus petits intervalles de durée $T_C$ telle que $NT_C$=PRP. Une option simple consiste donc à avoir pour chaque chaîne d’acquisition des portes temporelles PT1 - PTN non-recouvrantes et contiguës. Le profil de gain peut alors être appliqué par pas de durée Tc et être donc constant dans chacune des chaînes d’acquisition parallèles. Les N convertisseurs analogique-numériques 207-1 - 207-N vont donc fournir des résultats d’intégration sur Tc et non pas sur PRP. Dès lors l’intégration sur PRP est simplement la somme des N sorties des convertisseurs, réalisé par un circuit numérique de combinaison CNR.

Il est également possible d’échantillonner le signal à la cadence Tc et non pas PRP en entrelaçant les échantillons en sortie des différents convertisseurs plutôt qu’en les sommant. Cela peut être intéressant notamment pendant une phase d’apprentissage du canal, pour accélérer la vitesse d’acquisition au prix d’une consommation plus élevée, avant de revenir à un fonctionnement plus parcimonieux (échantillonnage à la cadence PRP) en régime établi.

Si la relation PRP=N*Tc ne peut pas être obtenue, on peut tout de même avoir des configurations intéressantes avec N*Tc multiple ou sous-multiple de PRP. Si par exemple PRP=K*N*Tc avec K entier supérieur à 1, chacune des voies d’acquisition parallèles doit intervenir K fois dans une PRP ; son profil de gain devra alors, en général, varier dans le temps en prenant jusqu’à K valeurs différentes. Dans cas PRP=N*Tc/K, K chaînes d’acquisition interviennent sur chaque intervalle de durée Te, ce qui peut s’avérer utile pour améliorer l’écart signal à bruit en réalisant une intégration cohérente sur lesdits intervalles.

Sur la [Fig. 12], la référence CNR désigne le circuit numérique de recombinaison des sorties des convertisseurs analogique-numériques de manière générale, que a recombinaison soit une somme, un entrelacement ou une autre opération plus complexe.

L’invention a été décrite en référence à des modes de réalisation particuliers, mais des variantes sont possibles. Par exemple, la génération de deux composantes I et Q des signaux n’est pas essentielle (mais avantageuse, car elle permet de réduire la cadence d’acquisition). De même, les plages de fréquence et temporelles indiquées ne le sont qu’à titre d’exemple non limitatif. Par ailleurs, l’utilisation de deux composantes en quadrature n’est pas essentielle ; si seule la composante I est utilisée, le combineur 102 n’est pas nécessaire.

Deux exemples de modes de réalisation de metteurs en forme d’impulsion ont été fournis, mais d’autres solutions pouvant convenir à la mise en oeuvre de l’invention sont connues de l’art antérieur. On peut citer par exemple (Singh 2021), (Bechtum 2023), EP 3 790 188. L’art antérieur, cependant, vise essentiellement des applications aux communications, dans lesquelles les fonctionnalités « oscillateur » et « mise en forme d’impulsions » sont optimisées conjointement. Cela n’est pas le cas dans les applications Radar, où les contraintes sur le bruit de phase de l’oscillateur sont plus strictes et son fonctionnement doit être quasi-permanent pour permettre son utilisation en réception. Les spécifications sur la mise en forme des impulsions, par contre, sont similaires dans les deux applications.

Différentes technologies peuvent convenir à la mise en oeuvre de l’oscillateur local, en tenant compte du fait que le bruit de phase et la dérive sont des paramètres critiques. Une première possibilité est d’utiliser un oscillateur en anneau verrouillé par injection (ILRO de l’anglais « Injection-Locked Ring Oscillator), comme divulgué par Singh 2021), un oscillateur radiofréquence contrôlé numériquement (RFDCO de l’anglais « Radio-Frequency Digitally Controlled Oscillator) comme dans (Bechtum 2023) ou bien un oscillateur piloté en tension LC libre comme dans FR 3 015 153. En tout état de cause l’oscillateur doit pouvoir être calibré pour délivrer a priori une fréquence proche de la fréquence souhaitée, et redémarré à chaque impulsion pour appliquer un changement de fréquence. La dérive de l’oscillateur sur la durée séparant l’impulsion émise de l’écho reçu correspondant à la distance maximale doit être limitée, faute de quoi les performances seront dégradées. Par contre, le fait que la phase initiale de chaque impulsion soit maîtrisée et ainsi permettre un traitement cohérent des impulsions n’est pas indispensable, en tout cas pas à l’intérieur d’un intervalle entre deux impulsions. On peut aussi utiliser un modulateur de fréquence direct comme dans EP 3 790 188. Le point commun de ces différentes approches est un temps de verrouillage à une nouvelle fréquence très rapide car les oscillateurs ne sont pas placés dans des boucles à verrouillage de phase (PLL). L’avantage fondamental du modulateur de fréquence direct est de réaliser une transition quasiment instantanée entre deux valeurs de fréquences consécutives, tout en maintenant une continuité de la phase.

La [Fig. 13] illustre un mode de réalisation alternatif d’une voie d’émission d’un dispositif selon l’invention dans lequel la mise en forme des impulsions d’émission est réalisée en mélangeant, au moyen d’un mélangeur 1100 agencé à l’entrée de l’amplificateur de puissance 103, un signal d’enveloppe ENV et le signal d’oscillateur SO. Le signal d’oscillateur SO - comprenant deux composantes en quadrature I et Q - est également fourni à un metteur en forme d'impulsions de réception (non représenté), généralement du type « tout ou rien ».

Le signal d'oscillateur SO est généré par un oscillateur local contrôlé en tension de type LC 1204 (par exemple comme décrit dans FR 3 015 153), piloté par le générateur de signaux de contrôle 1202 qui détermine l'évolution temporelle de sa fréquence d'oscillation (par exemple, linéaire par paliers) au moyen d'un signal SCF et génère un signal SDA de démarrage de l'oscillateur. Le brouilleur de phase 1205 est constitué par un sélecteur de polarité 1206 piloté par un générateur de signaux de contrôle de polarité 1206 pour inverser, à des instants prédéfinis, la polarité du signal SO. En variante, les signaux de contrôle de polarité générés par le bloc 1206 peuvent être fournis directement à l'oscillateur 1204 pour déterminer sa polarité de démarrage (ligne pointillée sur la figure) ; dans ce cas, le sélecteur de polarité 1205 peut ne pas être nécessaire.

Il faut noter que, si le sélecteur de polarité 1205 est présent, il est possible de diriger vers la voie de réception le signal directement en sortie de l'oscillateur 1204, auquel cas le contrôle de polarité en réception sera traité de manière numérique.

En variante, l'oscillateur local 1204 peut fonctionner de manière continue.

Le signal d'enveloppe est généré par un module générateur d'enveloppe 1300 qui reçoit en entrée une forme d'enveloppe d'un module 1301 et une impulsion de déclenchement générée par un module 1302.

L'activation synchrone des éléments 1301, 1302, 1202, 1206, représentée schématiquement par une ligne pointillée verticale traversant les modules, est assurée par un signal d'horloge généré par l'horloge locale 1200. La forme d'onde (fréquence, enveloppe, polarité) est déterminée par un module de configuration 1207, agencé lui aussi en entrée des éléments 1301, 1302, 1202, 1206.

Dans le mode de réalisation de la [Fig. 14], l'oscillateur local à fréquence variable st réalisé à partir d'un modulateur de fréquence direct 1204' comme décrit dans EP 3 790 188. Ce modulateur fonctionne en continue, il n'y a donc pas de signal de déclenchement. Il reçoit en entrée un signal SCVF qui détermine l'évolution de la fréquence du signal SO et un signal d'horloge de référence SHR, générés par le bloc générateur de signaux de contrôle1202'.

La [Fig. 15] et la [Fig. 16] représentent des modes de réalisation semblables à ceux de la [Fig. 13] et de la [Fig. 14], respectivement, à ceci près que seul le signal d'oscillateur OSC est fourni en entrée de l'amplificateur de puissance 103, le signal d'enveloppe ENV servant à contrôler le gain dudit amplificateur. Dans ces modes de réalisation, l'amplificateur de puissance 103 est préférentiellement de type numérique.

La condition durée(IE)«durée(IDR) n'est pas essentielle. A la limite, il est même possible de prendre une même durée pour les deux impulsions.

Dans certains modes de réalisation, en particulier opérant à des fréquences THz (Terahertz), l'amplificateur à bas bruit 202 à l'entrée de la voie de réception peut être omis.

En présence d'un brouillage temporel de la PRP, le convertisseur analogique-numérique 207 et/ou l'éventuel intégrateur fenêtré 210 peuvent être pilotés par le signal d'horloge brouillé. Cela n'est cependant pas indispensable car la fréquence du signal de mélange filtré ne dépend que du retard entre le signal d'écho et l'impulsion de démodulation en réception, et n'est donc pas affectée par un éventuel brouillage temporel.

Le processeur 208 et, le cas échéant, le moyen de débrouillage en fréquence 211 peuvent être réalisés au moyen de circuits intégrés numériques dédiés (FPGA, ASIC) ou, plus avantageusement, d'un microprocesseur programmé de manière opportune. Dans ce dernier cas, le moyen de débrouillage en fréquence 211 peut être réalisé par voie logicielle.

L'invention convient particulièrement à la réalisation de radars « sur puce » dans lesquels le dispositif radar (ou au moins la voie d'émission et/ou la voie d'acquisition) est intégré monolithiquement, mais elle ne se limite pas à ce cas de figure.

Références

(Antide 2020) E. Antide, M. Zarudniev, O. Michel et M. Pelissier, "Comparative Study of Radar Architectures for Human Vital Signs Measurement," 2020 IEEE Radar Conférence (RadarConf20), Florence, Italy, 2020, pp. 1-6, doi: 10.1109/RadarConf2043947.2020.9266569.

(Liu 209) Y.-H. Liu et al., "9.3 A680 μW Burst-Chirp UWB Radar Transceiver for Vital Signs and Occupancy Sensing up to 15m Distance," 2019 IEEE International Solid- State Circuits Conférence - (ISSCC), San Francisco, CA, USA, 2019, pp. 166-168, doi: 10.1109/ISSCC.2019.8662536.

(Andersen 2017) N. Andersen et al., "A 118-mW Pulse-Based Radar SoC in 55-nm CMOS for Non-Contact Human Vital Signs Détection," in IEEE Journal of Solid-State Circuits, vol. 52, no. 12, pp. 3421-3433, Dec. 2017, doi: 10.1109/JSSC.2017.2764051.

(Siligaris 2023) Siligaris, A., Bossuet, A., Barrau, L., Antide, E., Gonzalez-Jimenez, J. L., Dehos, C., & Zarudniev, M. (2023, September). Fast Chirping 58-64 GHz FMCW Radar Transceiver using D-PROT Multiplier in CMOS 45nm RFSOI for Vital Signs Détection. In ESSCIRC 2023-IEEE 49th European Solid State Circuits Conférence (ESSCIRC) (pp. 505-508). IEEE.

(Eisenburger 2008) Eisenburger D. Krellmann Y., Lentz H., Trilzsch G. Stepped-Frequency Radar System in Gating Mode: an Experiment as a New Helicopter-Borne GPR System for Geological Applications, IGARSS 2008 - 2088 IEEE International Symposium on Geoscience and Remote Sensing, Boston.

(Bechtum 2023). Bechthum et al., "A 380μW IEEE 802.15.4z IR-UWB pulse-mixing transmitter featuring enable-locking RFDCO with extensive duty-cycling in 22nm FDSOI," ESSCIRC 2023- IEEE 49th European Solid State Circuits Conférence (ESSCIRC), Lisbon, Portugal, 2023, pp. 45-48

(Singh 2021). Singh et al., "An IR-UWB IEEE 802.15.4z Compatible Cohérent Asynchronous Polar Transmitter in 28-nm CMOS," in IEEE Journal of Solid-State Circuits, vol. 56, no. 12, pp. 3799-3810, Dec. 2021

## Revendications

**1.** Dispositif radar comprenant :

- une voie d'émission (1) configurée pour générer un signal radar (IE) ; et
- une voie de réception (2) configurée pour recevoir des échos (SE) dudit signal radar et pour les démoduler de manière synchrone à leur génération de manière à en extraire une information de temps de vol ;

dans lequel la voie d'émission (1) et la voie de réception (2) comprennent:

- un oscillateur local (1204) mutualisé, présentant une fréquence variable en fonction d'un signal de contrôle ;
- un générateur (1202) dudit signal de contrôle, adapté pour que la fréquence dudit oscillateur locale varie dans le temps de manière linéaire, ou bien varie de manière linéaire par marches d'une impulsion à l'autre, ou bien en prenant une pluralité de valeurs discrètes pouvant être obtenues par brouillage d'une variation linéaire par marches d'une impulsion à l'autre ; et
- des moyens de mise en forme (101, 201, 1206, 105) d'un signal généré par ledit oscillateur local (1204) à ladite fréquence variable, adaptés pour générer une série d'impulsions d'émission (IE) formant ledit signal radar et une série correspondante d'impulsions de démodulation en réception (IDR), chaque impulsion de démodulation en réception présentant une durée supérieure ou égale à celle de l'impulsion d'émission correspondante et définissant une plage temporelle respective de réception des échos ;

ladite voie de réception (2) comprenant en outre un mélangeur (203) configuré pour recevoir en entrée desdits échos (SE) dudit signal radar et une desdites impulsions de démodulation en réception (IDR) et fournir en sortie un signal de mélange (SM) ;
**caractérisé en ce que** :

- ladite voie de réception (2) comprend également un filtre passe-bas (206, 210) configuré pour filtrer ledit signal de mélange en extrayant sa première composante harmonique et un convertisseur analogique-numérique (207) pour convertir le signal de mélange filtré (SMF) au format numérique.

**2.** Dispositif radar selon la revendication 1 dans lequel les moyens de mise en forme comprennent :

- un premier metteur en forme d'impulsion (101), appartenant à ladite voie d'émission, configuré pour recevoir en entrée ledit signal généré par ledit oscillateur local à ladite fréquence variable et fournir à sa sortie lesdites impulsions d'émission (IE) ; et
- un deuxième metteur en forme d'impulsion (201), appartenant à ladite voie de réception, configuré pour recevoir en entrée ledit signal généré par ledit oscillateur local à ladite fréquence variable et fournir à sa sortie lesdites impulsions de démodulation en réception (IDR).

**3.** Dispositif radar selon l'une des revendications précédentes, comprenant un dispositif de pilotage (1203, 1206) dudit oscillateur local configuré pour redémarrer ledit oscillateur local (1204) lors de chaque génération d'une impulsion d'émission et de l'impulsion de démodulation en réception correspondante.

**4.** Dispositif radar selon la revendication 3 lorsqu'elle dépend directement de la revendication 1 dans lequel les moyens de mise en forme comprennent :

- ledit dispositif de pilotage (1206) dudit oscillateur local (1204), qui est configuré pour mettre en forme des fronts montants du signal généré par ce dernier à ladite fréquence variable ; et
- un dispositif de mise en forme de fronts descendants (105), agencé sur ladite voie d'émission, configuré pour recevoir en entrée ledit signal généré par ledit oscillateur local à ladite fréquence variable et fournir à sa sortie lesdites impulsions d'émission ;

ledit dispositif de mise en forme de fronts descendants (105) étant également configuré pour générer un signal de réinitialisation dudit oscillateur local.

**5.** Dispositif radar selon l'une des revendications 3 ou 4 comprenant également un brouilleur de période de répétition d'impulsions (1201), configuré pour contrôler ledit dispositif de pilotage de l'oscillateur (1204) local de façon à varier de manière pseudo-aléatoire l'intervalle entre deux redémarrages successifs dudit oscillateur local.

**6.** Dispositif radar selon l'une des revendications précédentes comprenant également un brouilleur de phase (1025) pour appliquer un même brouillage de phase aux impulsions d'émission (IE) et aux impulsions de démodulation en réception (IDR).

**7.** Dispositif radar selon l'une des revendications précédentes dans lequel ledit filtre passe-bas comprend un intégrateur fenêtré (210), configuré pour intégrer ledit signal de mélange sur des fenêtres temporelles d'intégration (FI) successives, chaque dite fenêtre temporelle d'intégration étant contenue dans la plage temporelle de réception des échos définie par une dite impulsion de démodulation en réception (IDR), et pour être réinitialisé à la fin de ladite fenêtre d'intégration.

**8.** Dispositif radar selon la revendication 7 dans lequel ledit intégrateur fenêtré (210) présente un gain d'intégration variable dans le temps de manière prédéterminée ou adaptative.

**9.** Dispositif radar selon l'une des revendications 7 ou 8 dans lequel ledit générateur du signal de contrôle (1202") est adapté pour que la fréquence dudit oscillateur local varie dans le temps en prenant une pluralité de valeurs discrètes pouvant être obtenues par brouillage d'une variation linéaire par marches ; et dans lequel la voie de réception (2) comprend aussi un moyen (211) de débrouillage en fréquence du signal de mélange filtré converti au format numérique.

**10.** Dispositif radar selon l'une des revendications précédentes dans lequel la voie de réception comprend un amplificateur (205) équipé d'un dispositif d'ajustement automatique de gain pour compenser des variations d'intensité des échos reçus.

**11.** Dispositif radar selon l'une des revendications précédentes dans lequel ledit oscillateur local (1204) est un oscillateur hyperfréquence.

**12.** Dispositif radar selon l'une des revendications précédentes dans lequel la voie de réception comprend une pluralité de chaînes d'acquisition parallèles, comprenant chacune un convertisseur analogique-numérique, la voie de réception comprenant également un moyen numérique de recombinaison des sorties desdits convertisseurs analogique-numérique.

[Fig. 1]

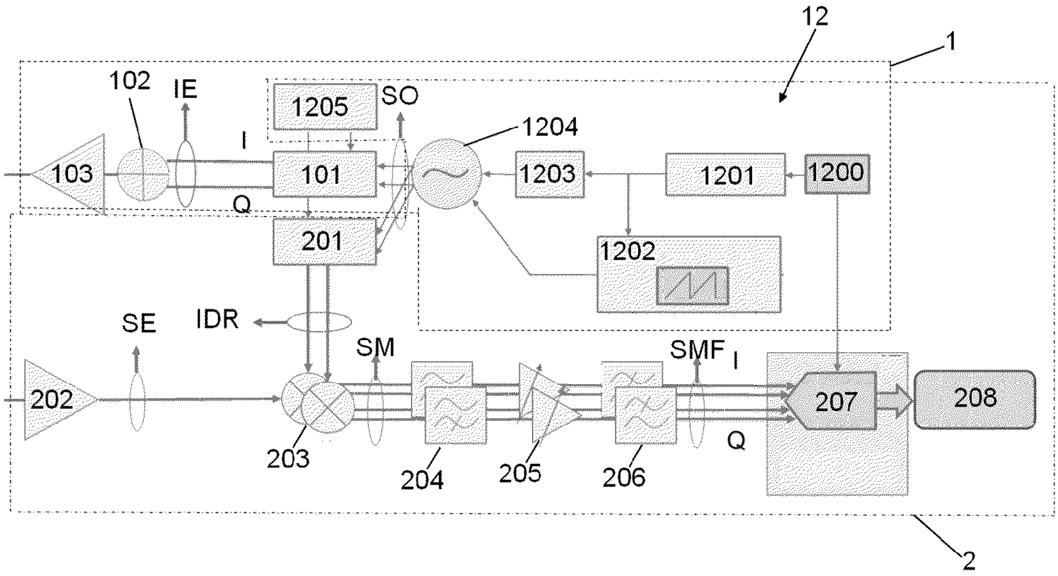
12
1
102
IE
1205
SO
1204
I
103
101
1203
1201
1200
Q
201
1202
SE
IDR
SM
SMF
I
202
207
208
Q
203
204
205
206
2

[Fig. 2]

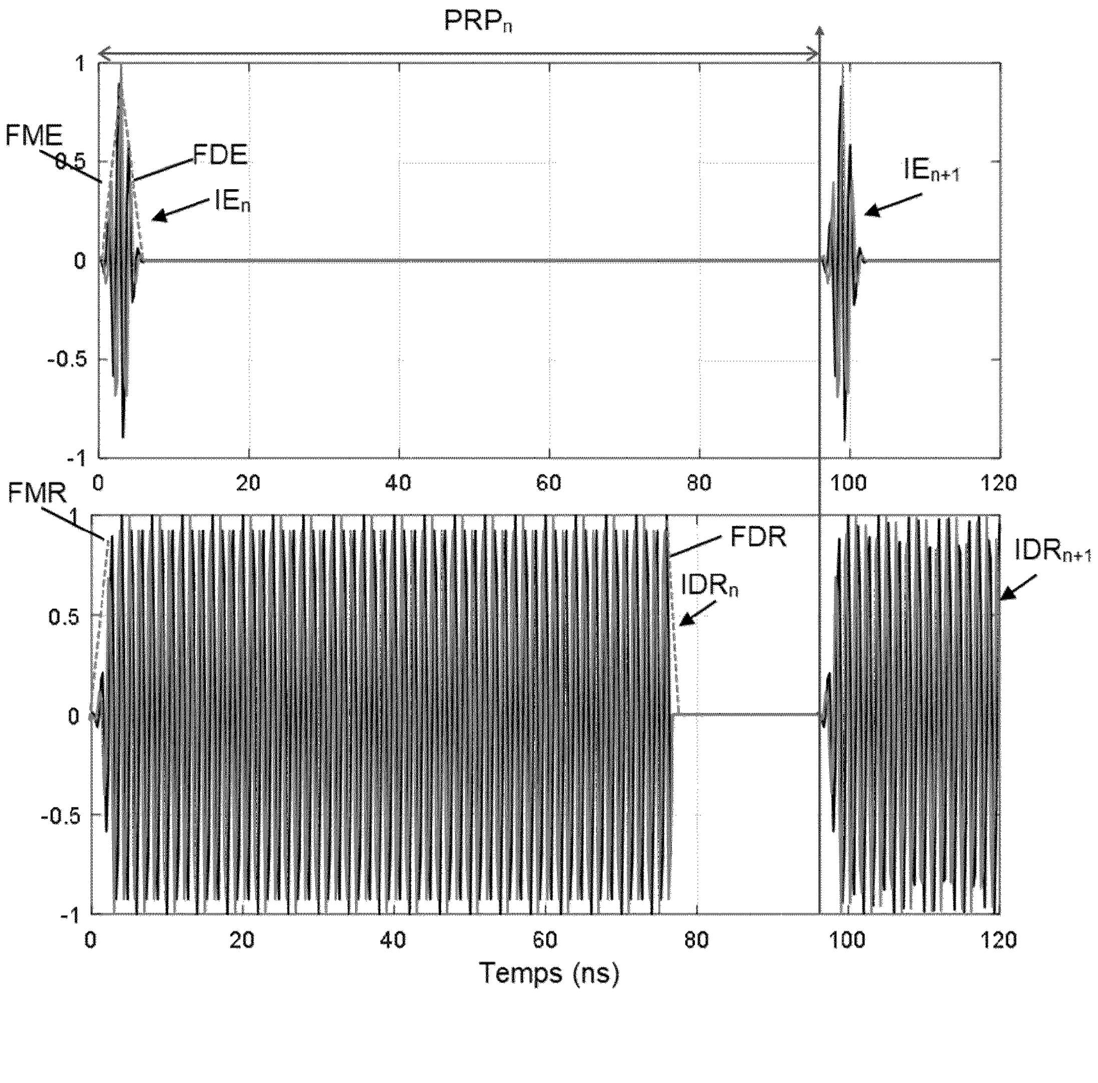
PRPn
FME
FDE
IEn
IEn+1
FMR
FDR
IDRn
IDRn+1
Temps (ns)

[Fig. 3]

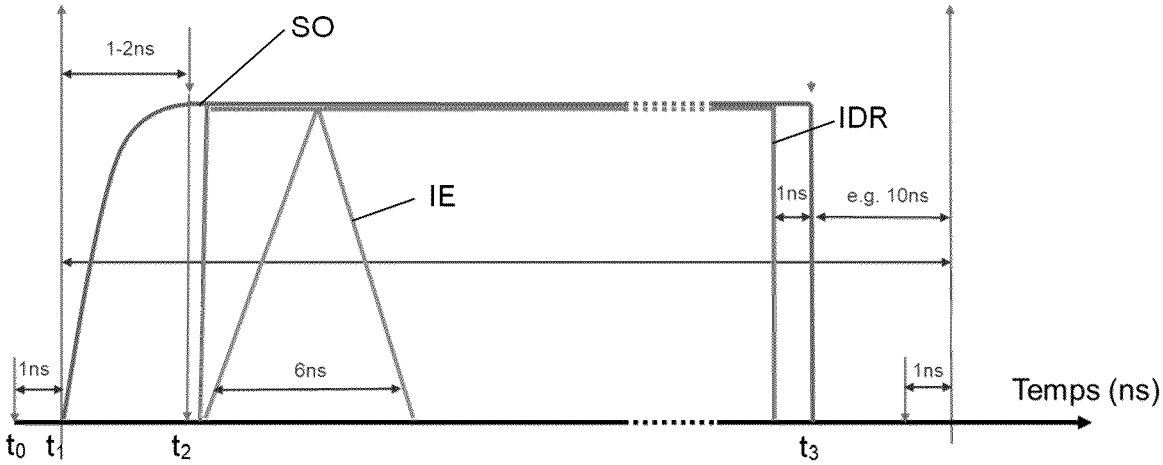
SO
1-2ns
IDR
IE
1ns
e.g. 10ns
1ns
6ns
1ns
Temps (ns)
t0 t1 t2 t3

[Fig. 4]

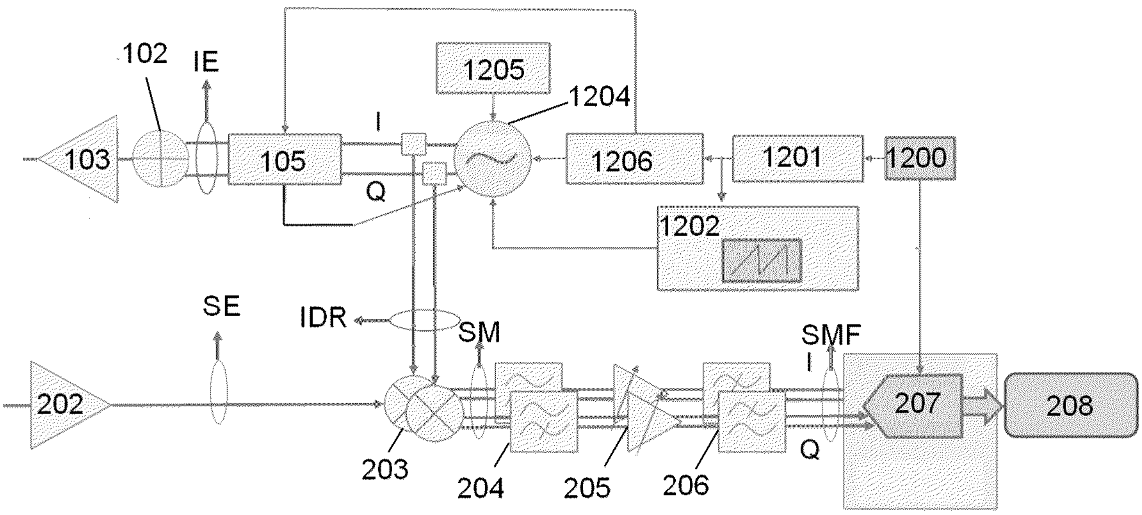
102
IE
1205
1204
I
103
105
1206
1201
1200
Q
1202
SE
IDR
SM
SMF
I
202
207
208
Q
203
204
205
206

[Fig. 5A]

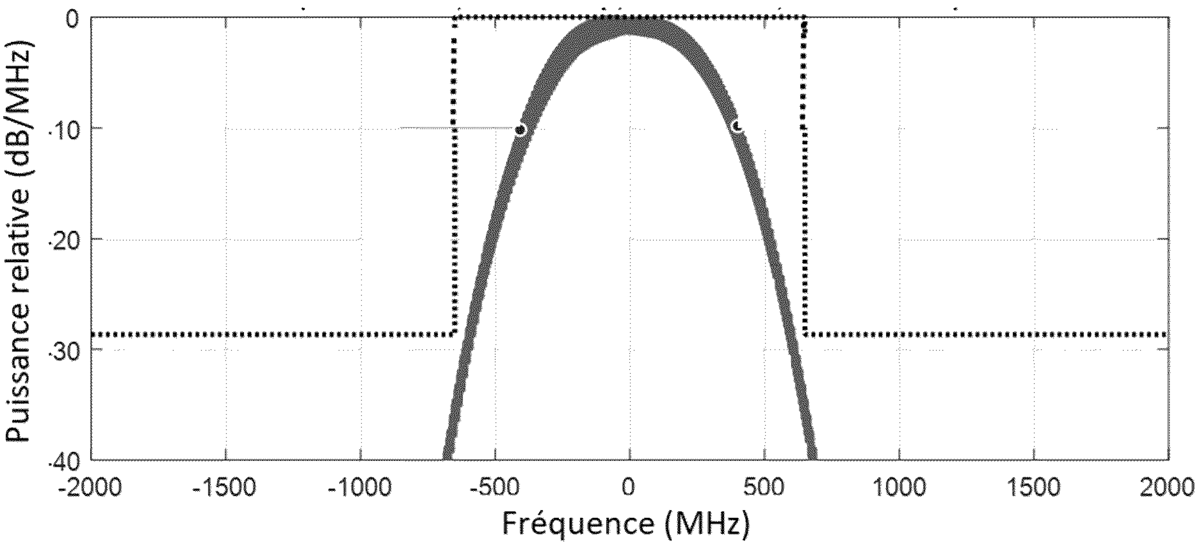
0
-10
-20
-30
-40
Puissance relative (dB/MHz)
-2000
-1500
-1000
-500
0
500
1000
1500
2000
Fréquence (MHz)

[Fig. 5B]

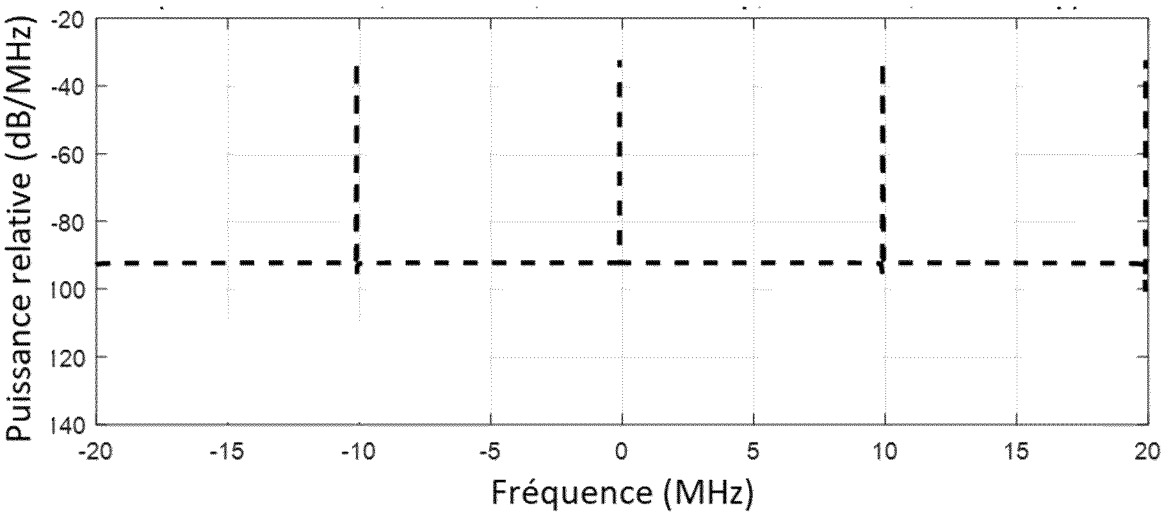
-20
-40
-60
-80
100
120
140
Puissance relative (dB/MHz)
-20
-15
-10
-5
0
5
10
15
20
Fréquence (MHz)

[Fig. 5C]

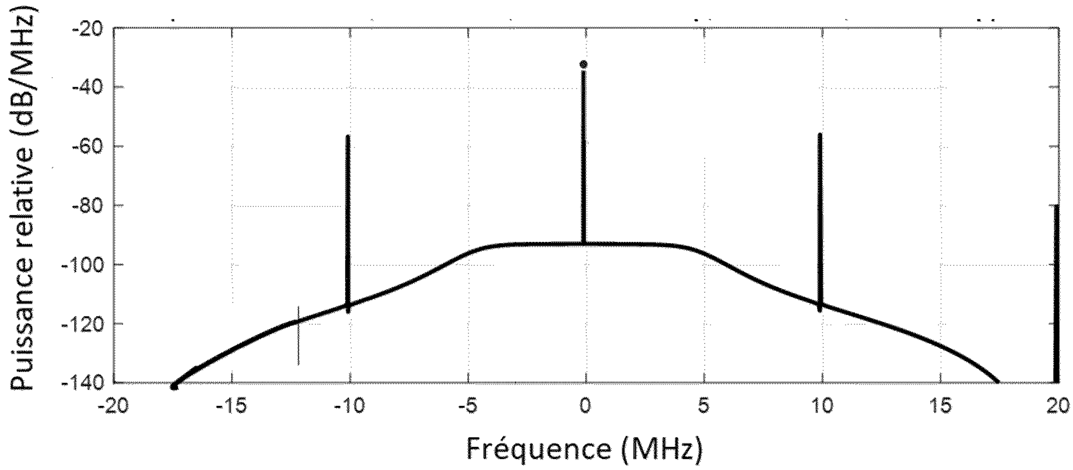


[Fig. 6A]

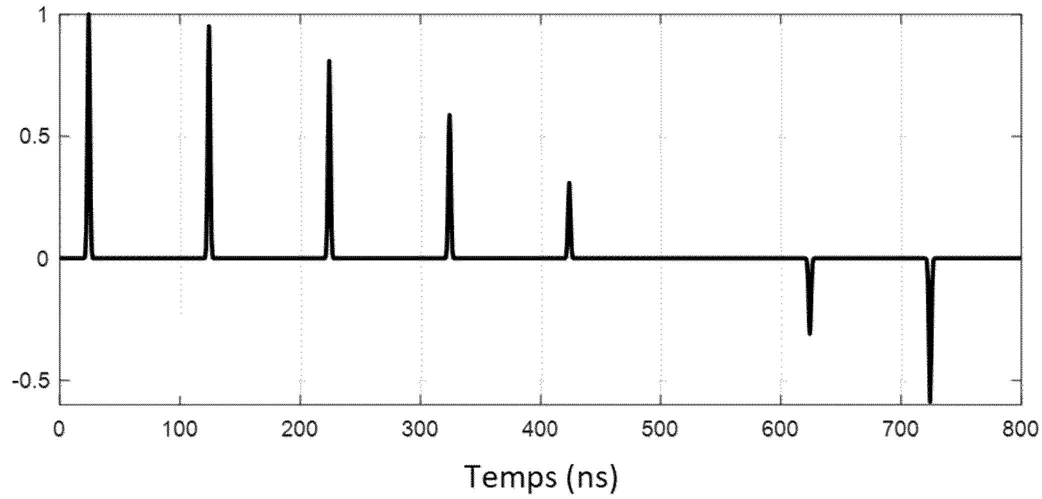


[Fig. 6B]

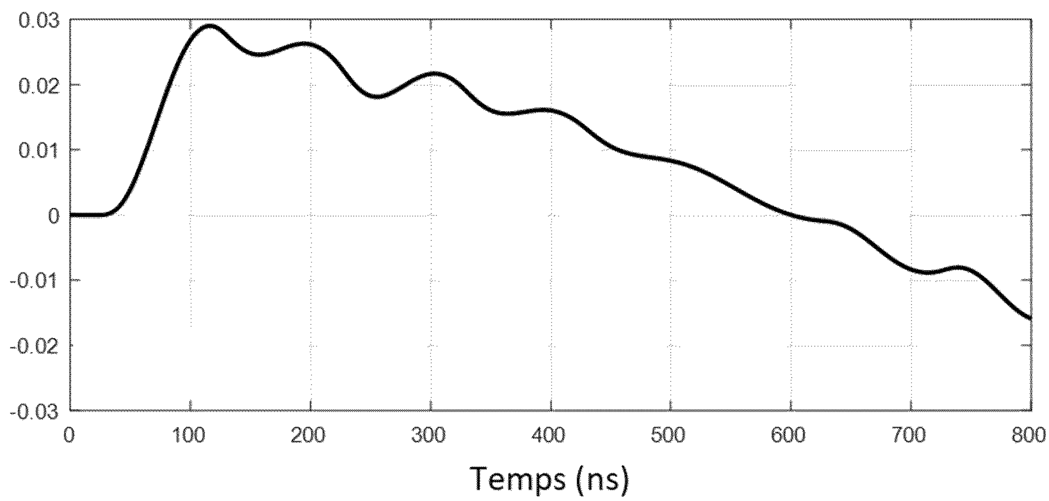

[Fig. 6C]

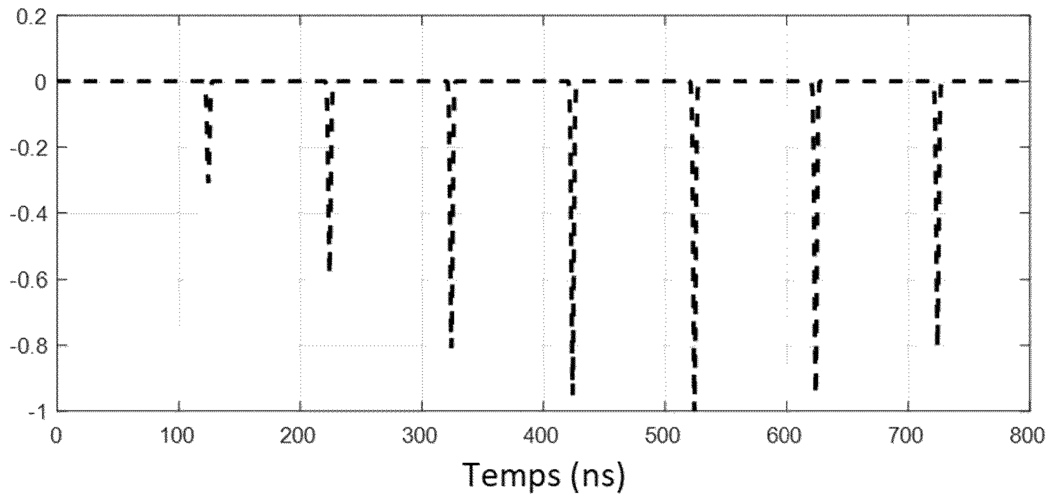


[Fig. 6D]

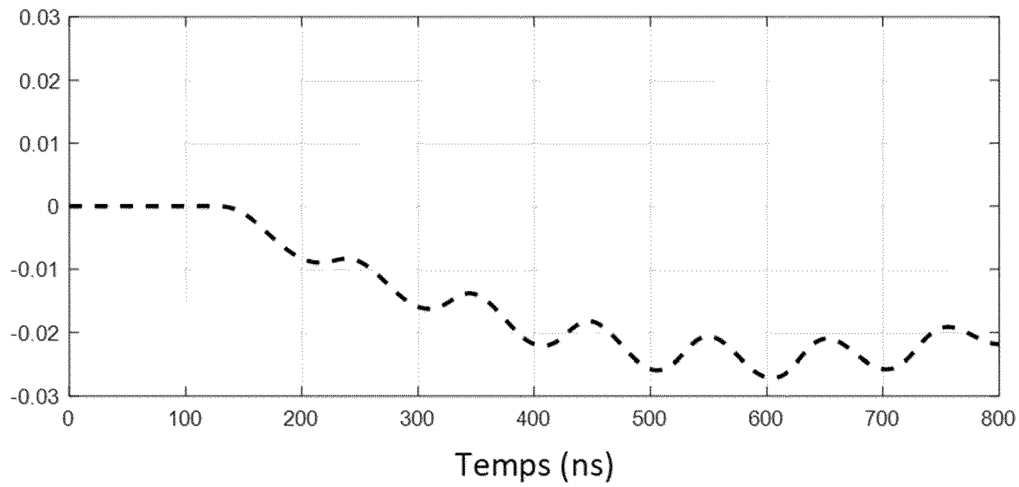


[Fig. 7A]

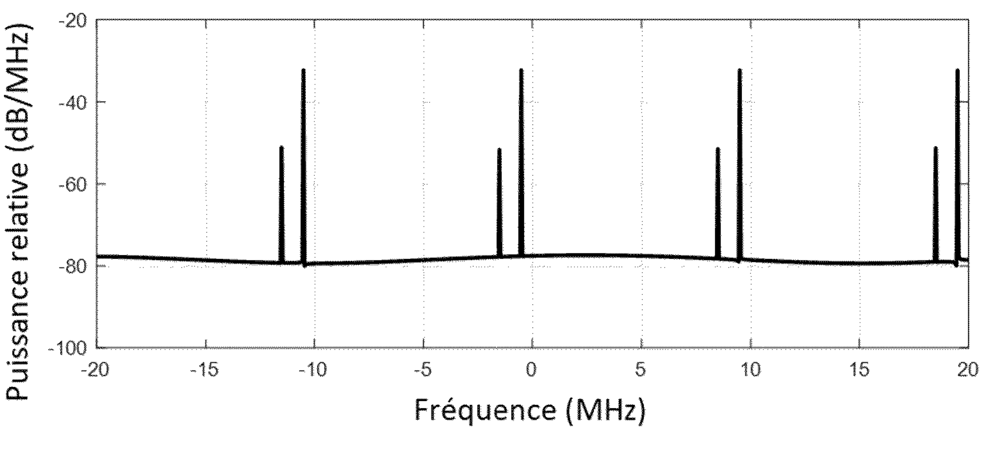

[Fig. 7B]

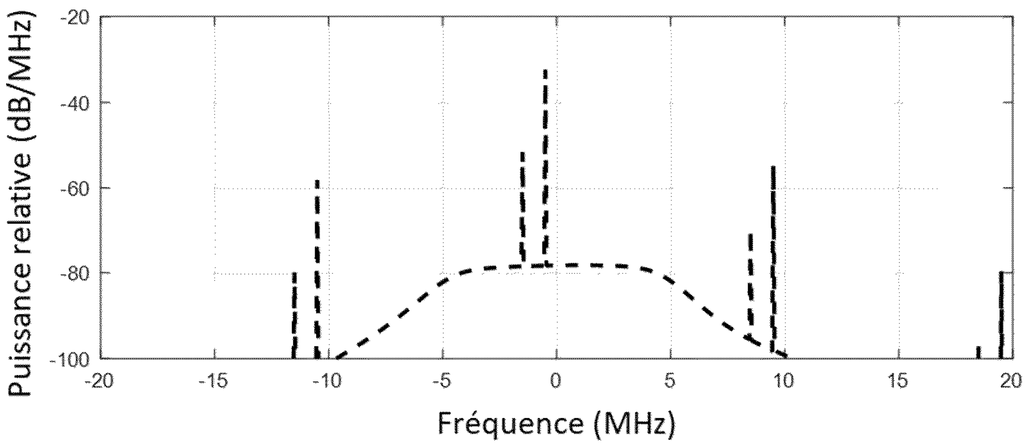


[Fig. 7C]

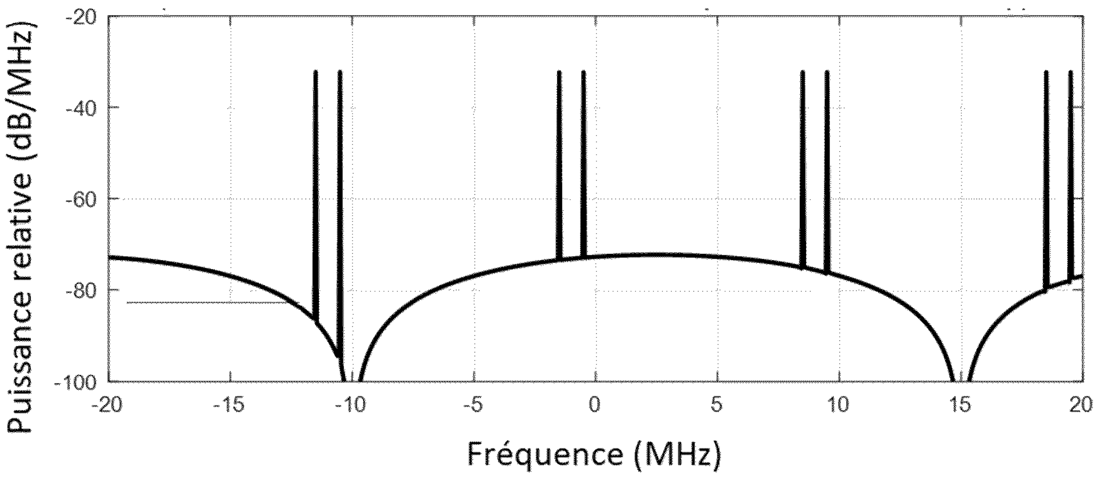


[Fig. 7D]

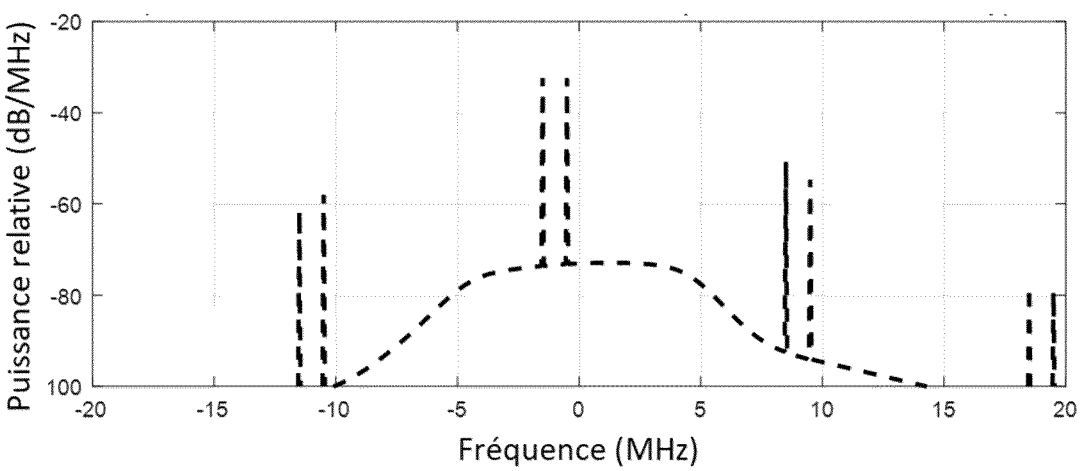

[Fig. 8]

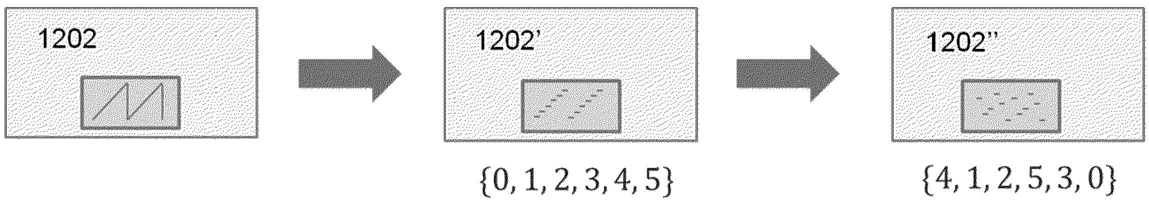


[Fig. 9]

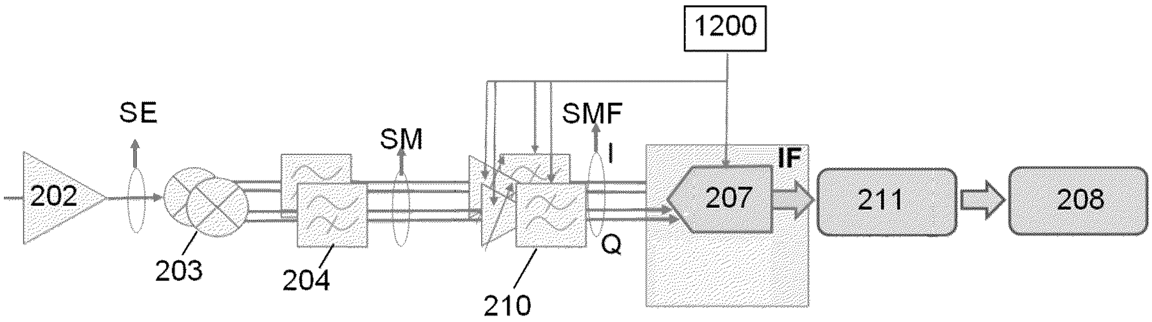


[Fig. 10]

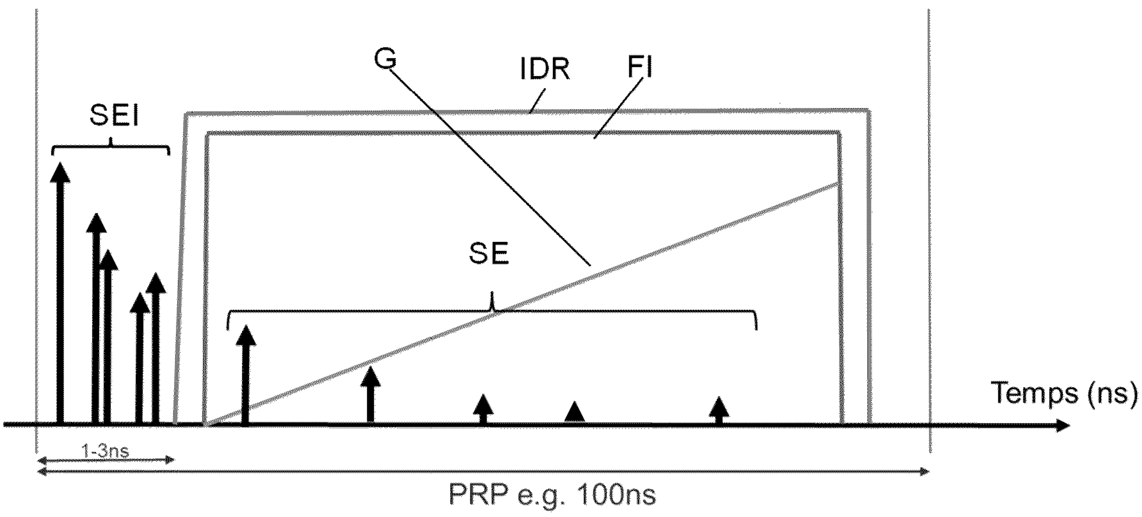

[Fig. 11]

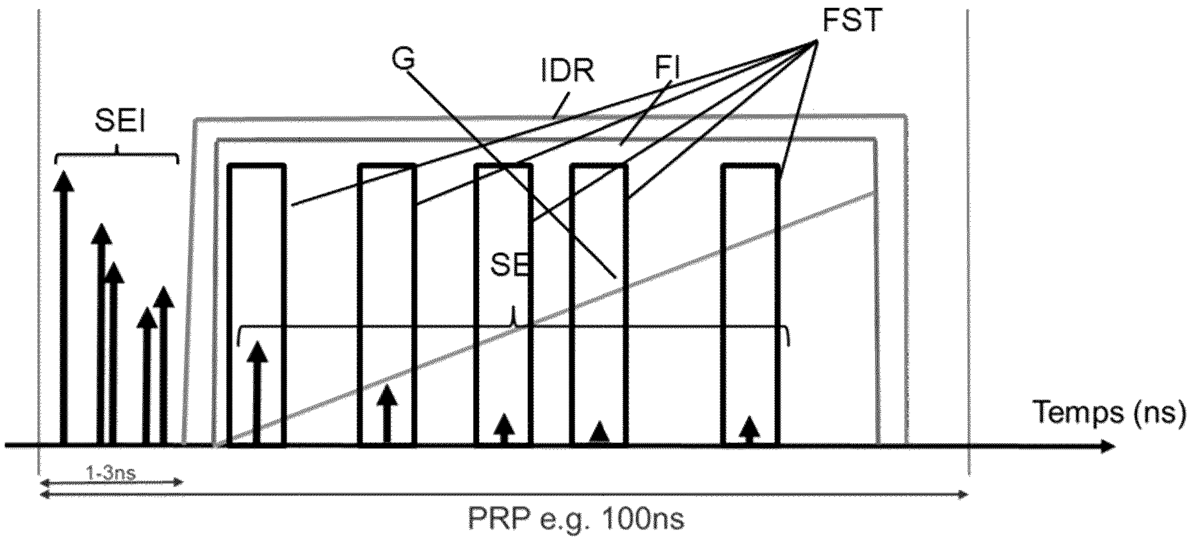
FST
G
IDR
FI
SEI
SE
Temps (ns)
1-3ns
PRP e.g. 100ns

[Fig. 12]

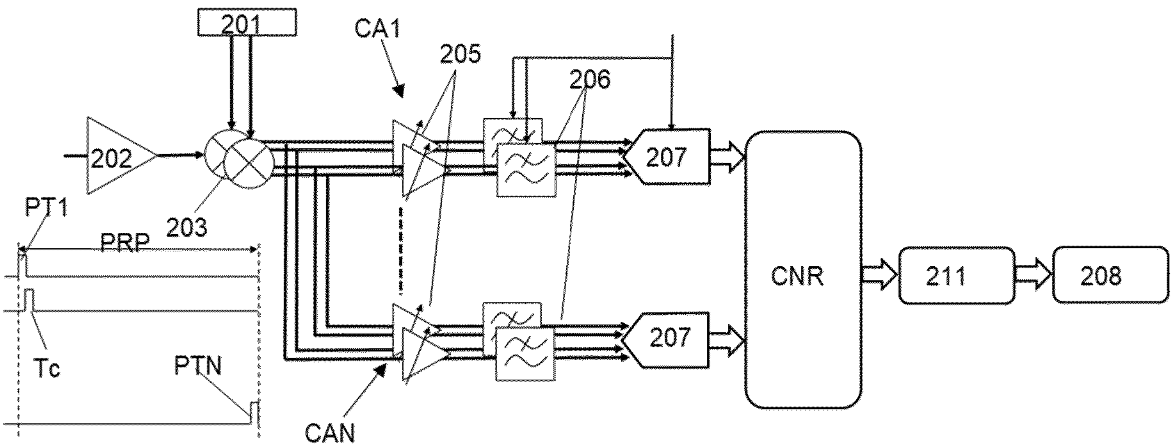
201
CA1
205
206
202
207
PT1
203
PRP
CNR
211
208
Tc
PTN
207
CAN

[Fig. 13]

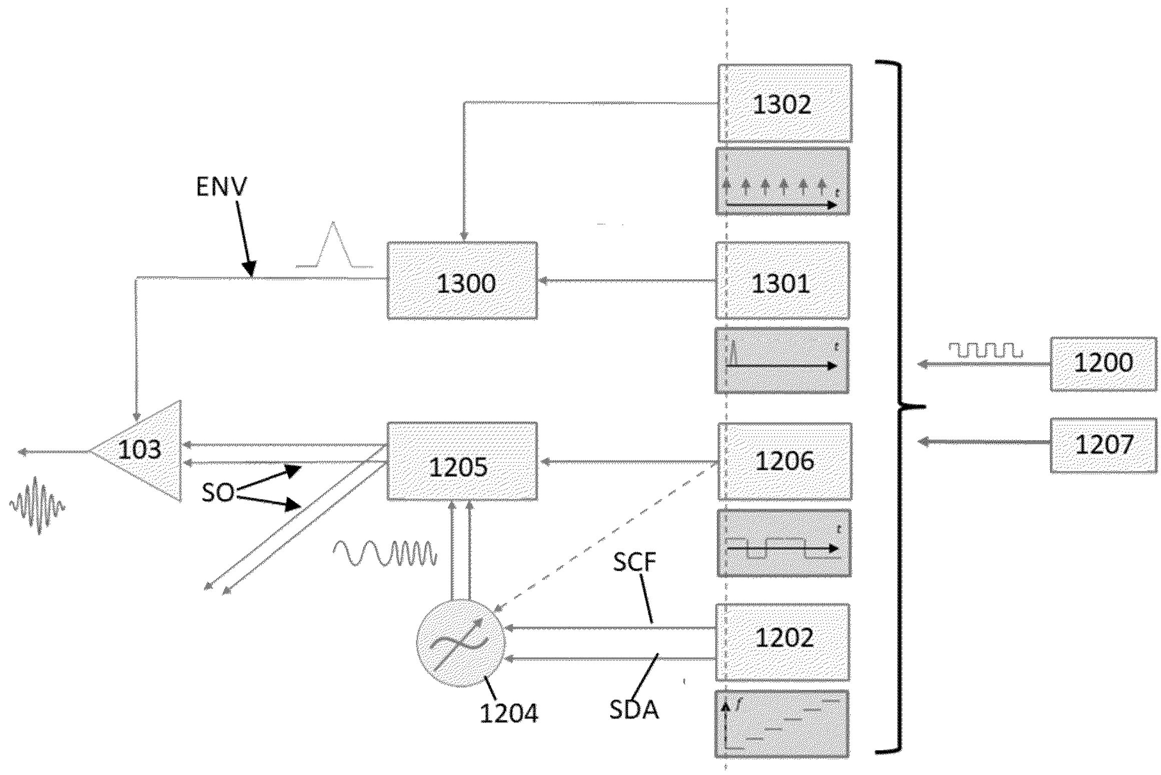
1302
ENV
1300
1301
1200
1207
103
1205
1206
SO
SCF
1202
1204
SDA

[Fig. 14]

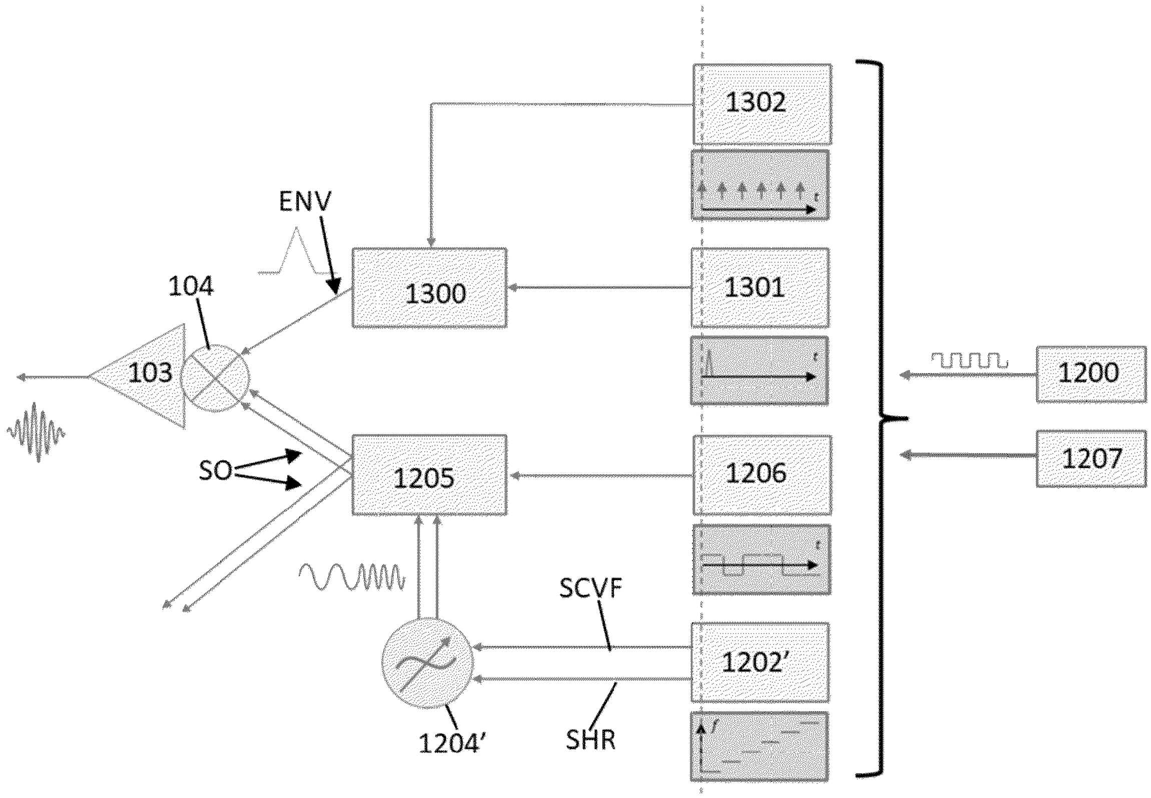
1302
ENV
104
1300
1301
103
1200
1205
1206
SO
1207
SCVF
1202'
1204'
SHR

[Fig. 15]

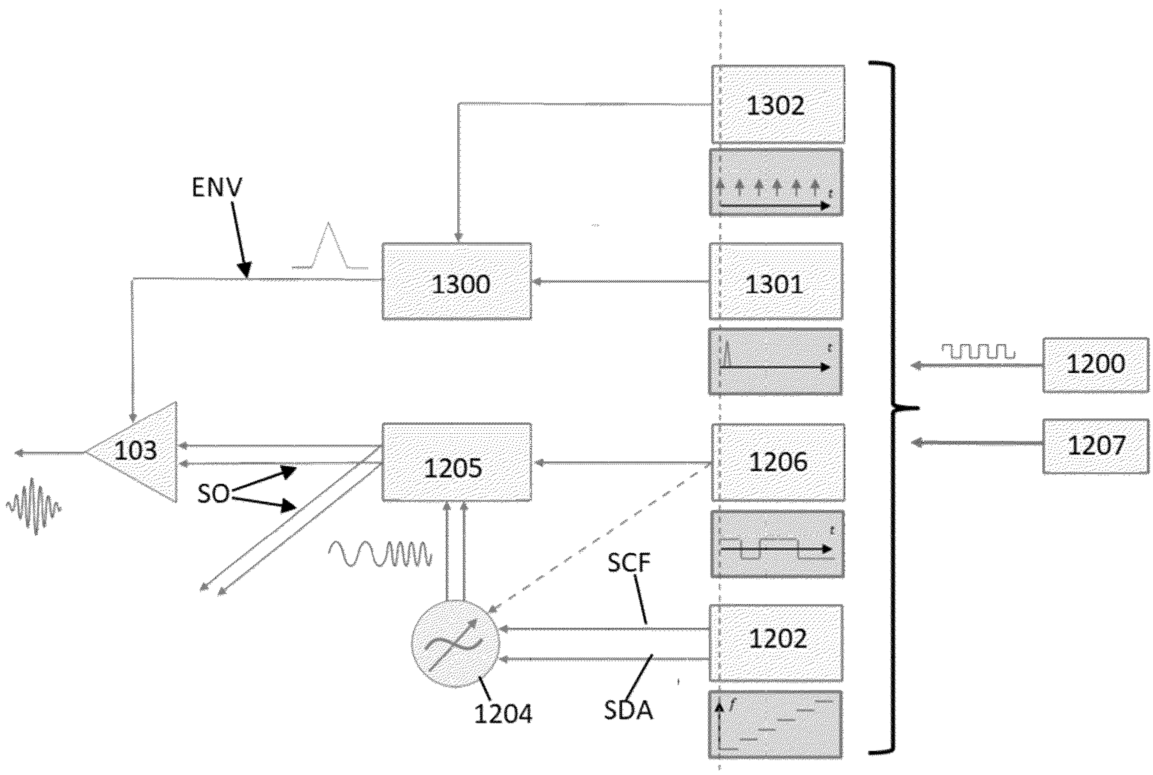
1302
ENV
1300
1301
1200
103
1205
1206
1207
SO
SCF
1202
1204
SDA

[Fig. 16]

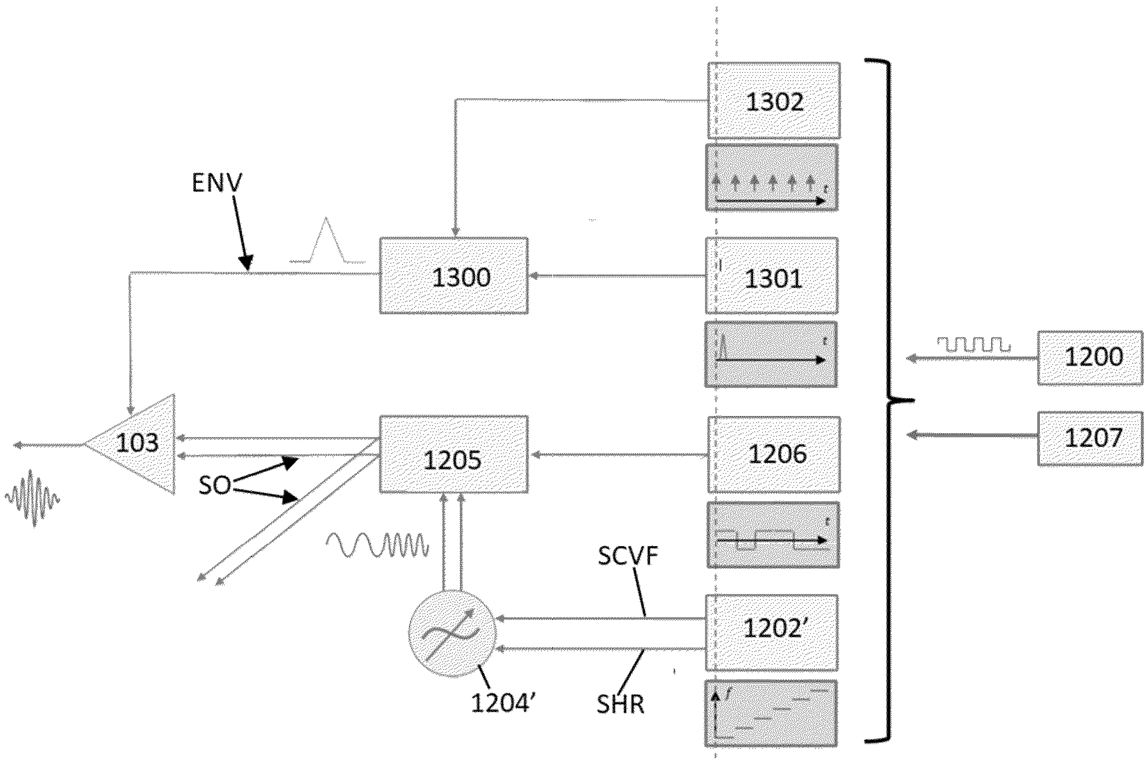
1302
ENV
1300
1301
1200
103
1205
1206
1207
SO
SCVF
1202'
1204'
SHR

Europäisches Patentamt
European Patent Office
Office européen des brevets

## RAPPORT DE RECHERCHE EUROPEENNE

Numéro de la demande
EP 24 22 1183

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y<br>A | US 2002/190894 A1 (MITSUMOTO MASASHI [JP] ET AL) 19 décembre 2002 (2002-12-19)<br>* figures 10-14 *<br>* alinéas [0005] - [0035] * | 1-6, 10-12<br>7-9 | INV.<br>G01S7/288<br>G01S7/282<br>G01S7/02<br>G01S7/03<br>G01S7/28<br>G01S7/292<br>G01S7/34<br>G01S13/10<br>G01S13/26<br>G01S13/30<br><br>ADD.<br>G01S13/22 |
| Y<br>A | DE 911 663 C (PINTSCH ELECTRO GMBH) 17 mai 1954 (1954-05-17)<br>* page 1, ligne 30 - page 3, ligne 20 *<br>* page 4, lignes 69-75 * | 1-6, 10-12<br>7-9 | |
| Y<br><br>A | STICKLEY G.F. ET AL: "Gated stepped-frequency ground penetrating radar", JOURNAL OF APPLIED GEOPHYSICS, vol. 43, no. 2-4, 1 mars 2000 (2000-03-01), pages 259-269, XP093182983, NL ISSN: 0926-9851, DOI: 10.1016/S0926-9851(99)00063-4<br>* figures 1-4 *<br>* page 260, colonne de droite, ligne 3 - page 262, colonne de gauche, ligne * * | 1-6, 10-12<br><br>7-9 | DOMAINES TECHNIQUES RECHERCHES (IPC)<br>G01S |
| Y<br>A | US 2005/156779 A1 (WIXFORTH THOMAS [DE]) 21 juillet 2005 (2005-07-21)<br>* figures 1,2 *<br>* alinéas [0064] - [0085] * | 1-6, 10-12<br>7-9 | |

-/--

Le présent rapport a été établi pour toutes les revendications

2

| Lieu de la recherche | Date d'achèvement de la recherche | Examinateur |
|---|---|---|
| Munich | 24 avril 2025 | Rodríguez González |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches Patentamt
European Patent Office
Office européen des brevets

## RAPPORT DE RECHERCHE EUROPEENNE

Numéro de la demande
EP 24 22 1183

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EISENBURGER D ET AL: "Stepped-Frequency Radar System in Gating Mode: An Experiment as a New Helicopter-Borne GPR System for Geological Applications", PROCEEDINGS / 2008 IEEE INTERNATIONAL GEOSCIENCE & REMOTE SENSING SYMPOSIUM : JULY 6 - 11, 2008, JOHN B. HYNES VETERANS MEMORIAL CONVENTION CENTER, BOSTON, MASSACHUSETTS, U.S.A, IEEE, PISCATAWAY, NJ, 7 juillet 2008 (2008-07-07), pages I-153, XP031421986, ISBN: 978-1-4244-2807-6 * figures 3, 4 * * page 153, colonne de droite, ligne 11 - page 154, colonne de gauche, ligne 19 * ----- | 1-12 | |
| A | INABA T: "INTERFERENCE SUPPRESSION IN FMICW RADAR WITH STAGGERED PULSE REPETITION INTERVAL", ELECTRONICS & COMMUNICATIONS IN JAPAN, PART I - COMMUNICATIONS, WILEY, HOBOKEN, NJ, US, vol. 90, no. 12, 1 décembre 2007 (2007-12-01), pages 86-100, XP001542551, ISSN: 8756-6621 * figures 2-4 * * page 86, colonne de gauche, lignes 1-21 * ----- | 1-12 | DOMAINES TECHNIQUES RECHERCHES (IPC) |
| A | US 2009/085796 A1 (KURODA HIROSHI [JP] ET AL) 2 avril 2009 (2009-04-02) * alinéa [0045]; figures 2, 6, 13 * ----- | 1-12 | |

Le présent rapport a été établi pour toutes les revendications

2

| Lieu de la recherche | Date d'achèvement de la recherche | Examinateur |
|---|---|---|
| Munich | 24 avril 2025 | Rodríguez González |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

page 2 de 2

## ANNEXE AU RAPPORT DE RECHERCHE EUROPEENNE RELATIF A LA DEMANDE DE BREVET EUROPEEN NO.

EP 24 22 1183

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-04-2025

| Document brevet cité au rapport de recherche | Date de publication | Membre(s) de la famille de brevet(s) | Date de publication |
|---|---|---|---|
| US 2002190894 A1 | 19-12-2002 | DE 10220357 A1 | 16-01-2003 |
| | | JP 3703014 B2 | 05-10-2005 |
| | | JP 2002341019 A | 27-11-2002 |
| | | US 2002190894 A1 | 19-12-2002 |
| DE 911663 C | 17-05-1954 | AUCUN | |
| US 2005156779 A1 | 21-07-2005 | DE 10208332 A1 | 04-09-2003 |
| | | EP 1481260 A1 | 01-12-2004 |
| | | JP 2005525547 A | 25-08-2005 |
| | | US 2005156779 A1 | 21-07-2005 |
| | | WO 03073124 A1 | 04-09-2003 |
| US 2009085796 A1 | 02-04-2009 | EP 2026098 A1 | 18-02-2009 |
| | | JP 4724694 B2 | 13-07-2011 |
| | | JP 2009042061 A | 26-02-2009 |
| | | US 2009085796 A1 | 02-04-2009 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20020190894 A
- FR 3099910
- FR 3015153
- EP 3790188 A


### Littérature non-brevet citée dans la description


- Comparative Study of Radar Architectures for Human Vital Signs Measurement. **E. ANTIDE** ; **M. ZARUDNIEV** ; **O. MICHEL** ; **M. PELISSIER**. 2020 IEEE Radar Conférence (RadarConf20), Florence, Italy. IEEE Radar Conférence (RadarConf20), 2020, 1-6
- **Y.-H. LIU et al.** 9.3 A680 μW Burst-Chirp UWB Radar Transceiver for Vital Signs and Occupancy Sensing up to 15m Distance. *2019 IEEE International Solid-State Circuits Conférence - (ISSCC), San Francisco, CA, USA*, 2019, 166-168
- **N. ANDERSEN et al.** A 118-mW Pulse-Based Radar SoC in 55-nm CMOS for Non-Contact Human Vital Signs Détection. *IEEE Journal of Solid-State Circuits*, December 2017, vol. 52 (12), 3421-3433
- GHz FMCW Radar Transceiver using D-PROT Multiplier in CMOS 45nm RFSOI for Vital Signs Détection. **SILIGARIS, A** ; **BOSSUET, A** ; **BARRAU, L.** ; **ANTIDE, E.** ; **GONZALEZ-JIMENEZ** ; **J. L., DEHOS, C** ; **ZARUDNIEV, M**. Fast Chirping. IEEE, September 2023, vol. 58-64, 505-508
- **EISENBURGER D** ; **KRELLMANN Y.** ; **LENTZ H** ; **TRILZSCH G**. Stepped-Frequency Radar System in Gating Mode: an Experiment as a New Helicopter-Borne GPR System for Geological Applications. *IGARSS 2008 - 2088 IEEE International Symposium on Geoscience and Remote Sensing, Boston*
- **BECHTHUM et al.** A 380μW IEEE 802.15.4z IR-UWB pulse-mixing transmitter featuring enable-locking RFDCO with extensive duty-cycling in 22nm FDSOI. *ESSCIRC 2023- IEEE 49th European Solid State Circuits Conférence (ESSCIRC), Lisbon, Portugal*, 2023, 45-48
- **SINGH et al.** An IR-UWB IEEE 802.15.4z Compatible Cohérent Asynchronous Polar Transmitter in 28-nm CMOS. *IEEE Journal of Solid-State Circuits*, December 2021, vol. 56 (12), 3799-3810